# DEMANDE DE BREVET EUROPEEN

(11) **EP 3 836 060 A1**
(43) Date de publication de la demande: **16.06.2021**
(21) Numéro de dépôt: 20203603.4
(22) Date de dépôt: 23.10.2020
(51) Int. Cl.: G06Q 20/34, G06Q 20/40

(54) **TRAITEMENT DE TRANSACTIONS SELON UN PROFIL OPÉRATIONNEL**

(30) Priorité: 13.12.2019 FR 1914345
(71) Demandeur: IDEMIA France, 92400 Courbevoie (FR)
(72) Inventeur: DE OLIVEIRA, Marco, 92400 Courbevoie (FR); MARTIN-MARTINASSO, Ludovic, 92400 Courbevoie (FR); WAKNIOUN, Aissa, 92400 Courbevoie (FR)
(74) Mandataire: Cabinet Beau de Loménie

(57) **Abrégé**

L'invention vise un procédé réalisé par un dispositif (DV1) comprenant une interface de communication (INT) et au moins un profil opérationnel (PR), chaque profil définissant des paramètres (PT) pour traiter une transaction (TR1), le procédé comprenant : sélection d'un premier profil (PR1) associé à une première interface de communication (INT1) ; chargement dans une mémoire (MR2) du dispositif d'une copie du premier profil, formant un profil temporaire (PX) ; traitement d'une transaction courante (TR1) selon le profil temporaire (PX) en coopérant avec un terminal externe (T1) au moyen de la première interface de communication (INT1) ; et en réponse à un événement déclencheur (EVT), modification d'un paramètre (PT) du profil temporaire pour poursuivre le traitement de la transaction courante (TR1), selon le profil temporaire (PX) modifié, au moyen de la première interface de communication (INT1) ou d'une autre interface de communication (INT).

## Description

### Domaine Technique

L'invention porte sur le traitement de transactions par un dispositif électronique et concerne plus particulièrement la gestion de profils opérationnels dans un dispositif électronique pour traiter une transaction quelconque, telle que notamment une transaction de paiement ou une transaction d'authentification.

### Technique antérieure

Divers dispositifs électroniques ont été développés au cours du temps pour traiter des transactions, telles que des transactions de paiement ou des transactions d'authentification. Les cartes de type cartes à puce, cartes magnétiques ou autres sont ainsi massivement utilisées aujourd'hui pour réaliser des transactions en coopération avec un terminal externe. Les cartes bancaires, par exemple, sont configurées pour traiter notamment des transactions bancaires ou transactions de paiement en coopérant avec des terminaux de paiement ou autres terminaux appropriés (guichet automatique bancaire, terminaux, automates...). Les cartes (cartes à puce, badge, etc.) sont également fréquemment utilisées pour réaliser divers types de transactions, telles que notamment des transactions d'authentification pour permettre à un utilisateur de s'authentifier auprès d'une ressource en coopérant avec un terminal externe (badge d'accès, carte de fidélité, clé pour accéder à un véhicule ou autre...).

Plus récemment, les solutions de paiement mobile ont connu un essor important. Celles-ci s'appuient sur des terminaux de communication (du type smartphone ou autres) mettant en œuvre une application de paiement pour traiter notamment des transactions de paiement en coopérant avec un terminal de paiement.

Dans le cas plus particuliers des transactions de paiement, diverses implémentations sont possibles pour gérer les échanges de données survenant entre le dispositif électronique (carte à puce, terminal de communication ou autre) et un terminal externe. Le standard EMV (pour « Europay Mastercard Visa ») est majoritairement utilisé aujourd'hui par les cartes à puce et solutions de paiement mobile pour traiter des transactions de paiement de façon sécurisée, d'autres standards étant toutefois possibles.

Pour communiquer avec l'extérieur, une carte à puce respecte un protocole de communication approprié pour interagir avec un terminal externe. Ainsi, le protocole ISO 7816 est le protocole de communication utilisé couramment par les cartes à puce pour coopérer par contact avec des terminaux externes, par exemple avec des terminaux de paiement lors de transactions de paiement par contact. Le traitement de transactions en sans contact est également de plus en plus fréquemment utilisé (notamment par les cartes bancaires et solutions de paiement mobiles), par exemple en appliquant le protocole ISO 14443 ou NFC/ISO 15693 pour les transactions de paiement.

De façon générale, il a été constaté que la complexité du traitement des transactions, notamment des transactions de paiement, s'est accrue de façon significative ces dernières années, et ce pour diverses raisons. Ainsi, de plus en plus d'aspects ou caractéristiques d'une transaction de paiement varient de façon dynamique au cours de la transaction, que ce soit à la demande du dispositif électronique (c.-à-d. la carte par exemple) ou à la demande du terminal externe.

Les dispositifs électroniques destinés à traiter des transactions embarquent (ou utilisent) des équipements de plus en plus complexes et mettent en œuvre des fonctions de plus en plus variées, ce qui peut affecter profondément la manière dont une transaction est traitée dans le temps. Certaines cartes de paiement embarquent par exemple un ou des capteurs (capteurs biométriques, boutons...) pour détecter certains évènements qui peuvent avoir une incidence sur la manière donc une transaction est traitée.

De même, les interfaces de communication utilisables par les cartes à puce et autres dispositifs électroniques pour communiquer avec l'extérieur se sont diversifiées de façon importante ces dernières années. Or, les risques sécuritaires associés varient sensiblement en fonction de l'interface de communication utilisée (les risques associés à une transaction par contact ne sont pas les mêmes que pour une transaction en sans contact par exemple). En particulier, le traitement de transactions en sans contact longue distance peut s'avérer plus difficile à sécuriser en raison de risques d'attaques propres à ce type de communication.

Il est donc important de prendre en compte la complexité et l'évolution dynamique dans le temps de certains aspects d'une transaction pour que cette dernière soit traitée au mieux par le dispositif électronique concerné.

Il existe ainsi un besoin pour répondre aux différents aspects et problèmes évoqués ci-dessus. Un besoin existe en particulier pour une solution permettant un traitement flexible et efficace de transactions quelconques, par exemple de transactions de paiement ou transactions d'authentification, en prenant en compte différents aspects variant de façon dynamique dans le temps lors du traitement des transactions. Il est notamment souhaitable d'adapter au cas par cas le traitement d'une transaction, tout en maintenant un niveau de sécurité approprié et une cohérence dans le temps du traitement de multiples transactions.

### Exposé de l'invention

A cet effet, la présente invention vise un procédé (ou procédé de traitement) mis en œuvre par un dispositif électronique comprenant au moins une interface de communication pour communiquer avec l'extérieur et au moins un profil opérationnel sélectionnable par le dispositif électronique, dans lequel chaque profil opérationnel est stocké dans une mémoire non volatile du dispositif électronique et définit au moins un paramètre selon lequel le dispositif électronique doit opérer pour traiter une transaction en utilisant une interface de communication associée, le procédé comprenant :
- sélection d'un premier profil opérationnel associé à une première interface de communication ;
- chargement dans une mémoire volatile du dispositif électronique d'une copie du premier profil opérationnel sélectionné, ladite copie formant un profil temporaire distinct dudit premier profil opérationnel ;
- traitement d'une transaction courante conformément au profil temporaire en coopérant avec un terminal externe au moyen de la première interface de communication ; et
- en réponse à au moins un évènement déclencheur détecté au cours de ladite transaction courante, modification d'au moins un paramètre du profil temporaire pour poursuivre le traitement de la transaction courante, selon le profil temporaire modifié, au moyen de la première interface de communication ou d'une autre dite interface de communication, ladite modification étant déterminée à partir d'au moins une règle prédéterminée définissant au moins une modification à appliquer en réponse audit évènement déclencheur EVT.

L'invention permet d'adapter dynamiquement le traitement d'une transaction courante au cours du temps en modifiant les paramètres d'un profil temporaire de sorte à ce que celui-ci soit distinct des profils opérationnels préenregistrés dans le dispositif électronique. Des modifications (ou mises à jour) peuvent ainsi être apportées au profil temporaire, sans modifier les profils opérationnels qui restent inchangés dans la mémoire du dispositif électronique. Les modifications apportées au profil temporaire au cours du temps peuvent être fonction de divers évènements détectés par le dispositif électronique.

En particulier, il est possible de modifier dynamiquement les paramètres du profil temporaire lors d'une transaction courante en fonction notamment d'un ou d'une pluralité de changements d'interfaces de communication opérés par le dispositif électronique et/ou de changements d'état du dispositif électronique. En outre, l'invention offre la possibilité d'adapter le comportement du dispositif électronique de sorte que le profil temporaire puisse être différent selon l'ordre dans lequel ces évènements interviennent. Par exemple, selon l'ordre dans lequel des changements d'interface de communication se produisent, le profil temporaire peut évoluer différemment afin d'adapter le comportement du dispositif électronique à chaque situation particulière.

En modifiant dynamiquement le profil temporaire, on peut ainsi personnaliser la gestion de risque implémentée par le dispositif électronique de sorte à réaliser la transaction courante de façon à la fois flexible et sécurisée.

Selon un mode de réalisation particulier, sur détection que la transaction courante est terminée, le dispositif électronique supprime le profil temporaire modifié tout en maintenant dans la mémoire non volatile ledit au moins un profil opérationnel. Si des modifications successives étaient apportées à ce même profil temporaire au cours de multiples transactions au cours du temps, cela pourrait résulter en des variations importantes des paramètres du profil temporaire (déviations des paramètres) et cela pourrait déboucher sur un profil temporaire qui ne reflète plus suffisamment la politique de gestion (notamment gestion de risque) prévue dans le profil opérationnel initialement sélectionné. Afin de maintenir un certain niveau de cohérence et de sécurité dans le traitement de transactions au cours du temps, le profil temporaire modifié peut être supprimé une fois la transaction courante terminée, tout en conservant dans la mémoire non volatile chaque profil opérationnel. Il est ainsi possible d'éviter que le profil temporaire ne diverge trop de la politique de gestion de risque initialement prévue dans le profil opérationnel dont il est issu et, plus généralement, de garantir un traitement uniforme et cohérent des transactions au cours du temps.

Selon un mode de réalisation particulier, lors dudit chargement, le profil temporaire est chargé dans la mémoire volatile du dispositif électronique tout en maintenant dans la mémoire non volatile ledit au moins un profil opérationnel.

Selon un mode de réalisation particulier, ledit au moins un paramètre dudit au moins un profil opérationnel sélectionnable par le dispositif électronique comprend au moins un critère de sécurité à appliquer pour traiter de façon sécurisée une transaction.

Selon un mode de réalisation particulier, la transaction courante est une transaction de paiement.

Selon un exemple particulier, la transaction courante est une transaction de paiement de type EMV.

Selon un mode de réalisation particulier, ledit au moins un paramètre défini dans ledit au moins un profil opérationnel comprend au moins l'un parmi :
- un montant limite maximal autorisé pour une transaction courante ;
- un nombre limite maximal de transactions autorisées sans vérification d'un code PIN.

Selon un mode de réalisation particulier, chaque évènement déclencheur définit au moins l'un parmi un état du dispositif électronique lors de la transaction courante et au moins une caractéristique de la transaction courante.

Selon un mode de réalisation particulier, ladite au moins un règle prédéterminée est enregistrée dans une mémoire du dispositif électronique.

Selon un mode de réalisation particulier, ledit au moins un évènement déclencheur comprend au moins l'un parmi :
- un évènement détecté par un capteur embarqué dans le dispositif électronique ;
- des données externes reçues depuis le terminal externe ou un autre terminal au cours de la transaction courante ;
- des données internes générées par le dispositif électronique en réponse à la transaction courante ; et
- un évènement caractérisant l'utilisation d'une interface de communication par le dispositif électronique pour coopérer avec l'extérieur lors de la transaction courante.

Selon un mode de réalisation particulier, ledit au moins un évènement déclencheur détecté par le dispositif électronique caractérise une commutation, au cours de la transaction en cours, de l'interface de communication utilisée par le dispositif électronique pour traiter la transaction courante, depuis ladite première interface de communication vers une autre, dite deuxième, interface de communication dudit dispositif électronique.

Selon un mode de réalisation particulier, le procédé comprend :
- un enregistrement du profil temporaire, avant ou après ladite modification, dans la mémoire non volatile du dispositif électronique ; puis
- restauration du profil temporaire dans la mémoire volatile du dispositif électronique pour poursuivre le traitement de la transaction en cours, après une coupure d'alimentation du dispositif électronique résultant d'un changement d'interface de communication utilisée par le dispositif électronique, seulement si le temps écoulé entre la coupure d'alimentation et la restauration n'excède pas une durée limite prédéterminée.

Selon un mode de réalisation particulier, ladite au moins une règle prédéterminée définit, pour le premier profil opérationnel sélectionné, ladite au moins une modification à appliquer si au moins une condition prédéterminé est satisfaite.

Selon un mode de réalisation particulier, ladite modification comprend la modification de la valeur d'au moins un paramètre du profil temporaire.

Selon un mode de réalisation particulier, le procédé comprend :
- un chargement dans une mémoire du dispositif électronique d'un identifiant du premier profil opérationnel sélectionné ; puis
- identification du premier profil opérationnel à partir de l'identifiant ; et
- application de ladite au moins une règle prédéterminée audit profil temporaire en fonction du premier profil opérationnel identifié par ledit identifiant.

Le chargement de l'identifiant du premier profil opérationnel sélectionné peut ainsi être réalisé avant la détection dudit au moins un évènement déclencheur.

Selon un mode de réalisation particulier, ladite modification est réalisée de sorte que le profil temporaire modifié est différent de chaque profil opérationnel sélectionnable par le dispositif électronique.

Selon un mode de réalisation particulier, le procédé comprend :
- génération d'un historique représentatif d'au moins un évènement détecté par le dispositif électronique lors de la transaction courante ; et
- consultation de l'historique lors de la transaction courante,
   la modification dudit au moins un paramètre du profil temporaire étant réalisée en fonction dudit historique.

Selon un mode de réalisation particulier, le procédé comprend, au cours de la génération d'historique, le stockage dans l'historique d'au moins un compteur représentatif d'un nombre d'occurrences d'un événement prédéterminé au cours du temps, le profil temporaire étant modifié en fonction d'une valeur courante dudit au moins un compteur.

Selon un mode de réalisation particulier, la génération d'historique comprend une incrémentation d'un premier compteur sur détection d'un premier type d'événement et une décrémentation dudit premier compteur sur détection d'un deuxième type d'événement autre que ledit premier type d'évènement, le profil temporaire étant modifié en fonction d'une valeur courante dudit premier compteur.

Selon un mode de réalisation particulier, la génération d'historique comprend une décrémentation d'un deuxième compteur associé à un type d'événement prédéterminé après chaque écoulement d'une période de temps prédéterminée depuis un instant de référence.

Selon un mode de réalisation particulier, le procédé comprend N itérations de ladite modification de sorte à modifier successivement N fois au moins un paramètre du profil temporaire, N étant un entier supérieur ou égal à 2.

Selon un mode de réalisation particulier, le procédé comprend :
- à chaque itération de ladite modification, mise à jour d'un compteur de modifications de sorte à représenter le nombre total de modifications appliquées sur le profil temporaire, et
- sur détection que le compteur de modifications atteint une valeur seuil prédéterminée, blocage de toute modification ultérieure dudit profil temporaire.

Selon un mode de réalisation particulier, le profil temporaire est modifié sur détection qu'une vérification d'un code PIN a été réalisée avec succès par le dispositif électronique, le procédé comprenant un blocage ou suppression du profil temporaire modifié sur détection qu'un temps supérieur à une durée de validité limite s'est écoulée depuis la modification du profil temporaire, de sorte à empêcher le traitement de la transaction courante selon le profil temporaire modifié.

Selon un mode de réalisation particulier, le procédé comprend la suppression du profil temporaire modifié sur détection que la transaction courante est terminée.

Selon un mode de réalisation particulier, le procédé comprend le chargement dans une mémoire volatile du dispositif électronique de l'un parmi ledit au moins un profil opérationnel sélectionnable par le dispositif électronique après ladite suppression ou blocage dudit profil temporaire modifié.

Dans un mode particulier de réalisation, les différentes étapes du procédé de l'invention sont déterminées par des instructions de programmes d'ordinateurs.

En conséquence, l'invention vise aussi un programme d'ordinateur sur un support d'informations (ou support d'enregistrement), ce programme étant susceptible d'être mis en œuvre dans un dispositif électronique de l'invention ou plus généralement dans un ordinateur, ce programme comportant des instructions adaptées à la mise en œuvre des étapes d'un procédé tel que défini dans ce document.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations (ou support d'enregistrement) lisible par un dispositif électronique de l'invention ou plus généralement par un ordinateur, et comportant des instructions d'un programme d'ordinateur tel que défini dans ce document.

Le support d'informations peut être n'importe quelle entité ou dispositif capable de stocker le programme. Par exemple, le support peut comporter un moyen de stockage, tel qu'une mémoire non volatile réinscriptible ou une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

L'invention vise également un dispositif électronique correspondant configuré pour mettre en œuvre le procédé de l'invention. Plus particulièrement, l'invention concerne un dispositif électronique comprenant :
- au moins une interface de communication pour communiquer avec l'extérieur ;
- au moins un profil opérationnel sélectionnable par le dispositif électronique, dans lequel chaque profil opérationnel est stocké dans une mémoire non volatile du dispositif électronique et définit au moins un paramètre selon lequel le dispositif électronique doit opérer pour traiter une transaction en utilisant une interface de communication associée ;

- un module de sélection configuré pour sélectionner un premier profil opérationnel associé à une première interface de communication ;
- un module de chargement configuré pour charger dans une mémoire volatile du dispositif électronique une copie du premier profil opérationnel sélectionné, ladite copie formant un profil temporaire distinct dudit premier profil opérationnel ;
- un module de traitement configuré pour traiter une transaction courante conformément au profil temporaire en coopérant avec un terminal externe au moyen de la première interface de communication ; et
- un module de modification configuré pour modifier, en réponse à au moins un évènement déclencheur détecté au cours de ladite transaction courante, au moins un paramètre du profil temporaire pour permettre au module de traitement de poursuivre le traitement de la transaction courante, selon le profil temporaire modifié, au moyen de la première interface de communication ou d'une autre dite interface de communication, ledit module de modification étant configuré pour déterminer la modification apportée audit au moins un paramètre à partir d'au moins une règle prédéterminée définissant au moins une modification à appliquer en réponse audit évènement déclencheur.

Le dispositif électronique peut en outre être configuré pour, sur détection que la transaction courante est terminée, supprimer le profil temporaire tout en maintenant dans la mémoire non volatile ledit au moins un profil opérationnel.

A noter que les différents modes de réalisation définis dans ce document en relation avec le procédé de l'invention ainsi que les avantages associés s'appliquent de façon analogue au dispositif électronique de l'invention.

Pour chaque étape du procédé de l'invention, le dispositif électronique de l'invention peut comprendre un module (ou unité) correspondant configuré pour réaliser ladite étape.

Selon un mode de réalisation, l'invention est mise en œuvre au moyen de composants logiciels et/ou matériels. Dans cette optique, le terme « module » (ou unité) peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel configuré pour mettre en œuvre une fonction ou un ensemble de fonctions, selon ce qui est décrit dans ce document pour le module concerné.

De la même manière, un composant matériel correspond à tout élément d'un ensemble matériel (ou hardware) apte à mettre en œuvre une fonction ou un ensemble de fonctions, selon ce qui est décrit dans ce document pour le module concerné.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures:
[Fig. 1] La figure 1 représente schématiquement la structure d'un dispositif électronique selon un mode de réalisation particulier de l'invention ;
[Fig. 2] La figure 2 représente schématiquement des modules fonctionnels mis en œuvre par le dispositif électronique, selon un mode de réalisation particulier de l'invention ;
[Fig. 3] La figure 3 représente schématiquement des profils opérationnels sélectionnables par le dispositif électronique, selon un mode de réalisation particulier de l'invention ;
[Fig. 4] La figure 4 représente schématiquement un exemple de règles mises en œuvre par le dispositif électronique, selon un mode de réalisation particulier de l'invention ;
[Fig. 5] La figure 5 représente sous forme d'un diagramme les étapes d'un procédé de traitement, selon un mode de réalisation particulier de l'invention ;
[Fig. 6] La figure 6 représente sous forme d'un diagramme les étapes d'un procédé de traitement, selon un mode de réalisation particulier de l'invention ;
[Fig. 7] La figure 7 représente sous forme d'un diagramme les étapes d'un procédé de traitement, selon un mode de réalisation particulier de l'invention ;
[Fig. 8] La figure 8 représente sous forme d'un diagramme les étapes d'un procédé de traitement, selon un mode de réalisation particulier de l'invention ; et
[Fig. 9] La figure 9 représente sous forme d'un diagramme les étapes d'un procédé de traitement, selon un mode de réalisation particulier de l'invention.

### Description des modes de réalisation

Comme indiqué ci-avant, l'invention porte sur le traitement de transactions par un dispositif électronique. L'invention s'applique à tous types de dispositifs électroniques aptes à traiter une transaction quelconque en coopérant avec un terminal externe. Des exemples de réalisation sont décrits ci-après dans le cadre d'une carte à puce, bien que d'autres dispositifs électroniques soient possibles, tels que notamment les terminaux de communication de type smartphones, tablettes ou autres.

A noter également que la notion de transaction est ici entendue au sens large et comprend par exemple, dans le domaine bancaire, aussi bien une transaction de paiement ou de transfert qu'une consultation d'un compte bancaire sur un terminal bancaire. L'invention est décrite ci-après dans le cadre d'une carte de paiement destinée à réaliser des transactions de paiement (ces dernières étant entendues au sens large comme pouvant couvrir des transactions de débit, crédit, remboursement, etc.). On comprend que d'autres types de transactions sont envisageables dans le cadre de l'invention, telles que notamment des transactions d'authentification, par exemple pour contrôler l'accès à une ressource ou système (voiture, etc.) ou encore pour mettre en œuvre des cartes de fidélités, badges d'accès, titres de transport, cartes santé, cartes d'identité ou permis de conduire électronique, etc.

L'invention s'applique notamment aux terminaux de communication (smartphones, tablettes ou autres) comportant une application de paiement configurée pour traiter des transactions de paiement avec un terminal de paiement, par exemple selon le standard EMV ou selon tout autre standard approprié.

L'invention concerne le traitement de transactions par un dispositif électronique comprenant au moins une interface de communication pour communiquer avec l'extérieur et au moins un profil dit profil opérationnel, dans lequel chaque profil est stocké dans une mémoire volatile du dispositif électronique et définit au moins un paramètre selon lequel le dispositif électronique doit opérer pour traiter une transaction en utilisant une interface de communication associée.

L'invention vise en particulier à modifier dynamiquement dans le temps les paramètres d'un profil opérationnel lors du traitement d'une transaction courante en fonction d'évènements détectés par le dispositif électronique. Comme décrit par la suite, les évènements susceptibles de déclencher ces modifications et/ou d'affecter le type des modifications effectuées peuvent être multiples, tels que notamment des changements d'interfaces de communication utilisées par le dispositif électronique, des changements d'état du dispositif électronique ou encore des données internes ou externes détectés par le dispositif électronique. Ces adaptations de profil permettent en particulier d'adapter le traitement d'une transaction courante, notamment la gestion de risque implémentée par le dispositif électronique de sorte à traiter la transaction courante de façon à la fois flexible et sécurisée.

L'invention concerne également un procédé (dit aussi procédé de traitement) mis en œuvre par le dispositif électronique de l'invention. Selon différent modes de réalisation, le dispositif électronique de l'invention est configuré pour sélectionner un premier profil opérationnel associé à une première interface de communication ; charger dans une mémoire volatile du dispositif électronique une copie du premier profil opérationnel sélectionné, cette copie formant un profil temporaire ; traiter une transaction courante conformément au profil temporaire en coopérant avec un terminal externe au moyen de la première interface de communication ; et, en réponse à au moins un évènement déclencheur détecté au cours de ladite transaction courante, modifier au moins un paramètre du profil temporaire. Le dispositif électronique peut ainsi poursuivre le traitement de la transaction courante, selon le profil temporaire modifié, au moyen de la première interface de communication ou éventuellement d'une autre dite interface de communication.

Le dispositif électronique de l'invention peut en outre, sur détection que la transaction courante est terminée, supprimer le profil temporaire (chargé dans la mémoire volatile) tout en maintenant dans la mémoire non volatile ledit au moins un profil opérationnel, afin notamment de garantir la sécurité et la cohérence du traitement de transactions au cours du temps.

D'autres aspects et avantages de la présente invention ressortiront des exemples de réalisation décrits ci-dessous en référence aux dessins mentionnés ci-avant.

Sauf indications contraires, les éléments communs ou analogues à plusieurs figures portent les mêmes signes de référence et présentent des caractéristiques identiques ou analogues, de sorte que ces éléments communs ne sont généralement pas à nouveau décrits par souci de simplicité.

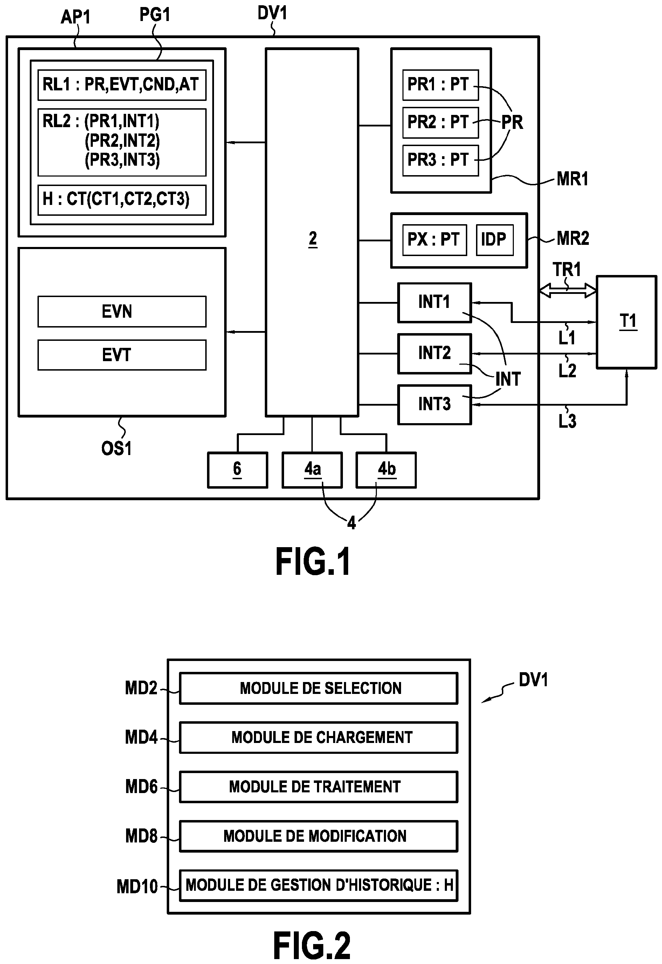

La **figure 1** représente schématiquement, selon un mode de réalisation particulier de l'invention, la structure d'un dispositif électronique DV1 configuré pour coopérer avec un terminal externe T1 pour traiter des transactions. Comme déjà indiqué, on considère ici à titre d'exemple que le dispositif électronique DV1 est une carte à puce, et plus particulièrement une carte de paiement, et que le terminal externe T1 est un terminal de paiement, d'autres modes de réalisation étant toutefois possibles. La carte à puce DV1 est par exemple configurée pour traiter des transactions de paiement selon le standard EMV avec le terminal T1. La carte à puce DV1 est par exemple conforme à la norme ISO 7816, d'autres exemples étant possibles.

La carte à puce DV1 comprend dans cet exemple un processeur 2, une mémoire non volatile réinscriptible MR1, une mémoire volatile (RAM) MR2, au moins une interface de communication INT. La carte à puce DV1 comprend également dans cet exemple des capteurs 4 et une batterie interne 6 bien que des modes de réalisation sans ces éléments sont possibles.

Plus spécifiquement, la mémoire non volatile réinscriptible (de type Flash ou EEPROM par exemple) comprend 3 profils opérationnels PR, notés respectivement PR1, PR2 et PR3. Chaque profil opérationnel, dit aussi « profil » par la suite, définit au moins un paramètre PT selon lequel la carte à puce DV1 doit opérer pour traiter une transaction courante TR1 en utilisant une interface de communication INT associée. Par exemple, ces profils opérationnels PR peuvent être tels que définis dans la spécification « Common Payment Application » de la norme EMV, par exemple dans sa version 1.0 ou ses versions ultérieures. D'autres implémentations de ces profils opérationnels PR sont toutefois possibles.

Selon un exemple particulier, le ou les paramètres PT définis dans les profils opérationnels comprennent au moins un critère de sécurité à appliquer pour traiter de façon sécurisée une transaction. La nature et l'utilisation de ces paramètres PT sont décrites plus en détail par la suite.

Les profils PR stockés dans la mémoire non-volatile MR1 sont dits « statiques » dans le sens où ils ne sont pas censés être modifiés au cours du traitement d'une transaction. Ces profils PR sont sélectionnables par la carte à puce DV1 pour traiter une transaction courante TR1.

On suppose par la suite que la transaction courante TR1 est traitée par la carte à puce DV1 selon le standard EMV, bien que d'autres modes de réalisation soient possibles.

De manière générale, le nombre et la nature des profils statiques PR peuvent varier selon le cas d'espèce. La carte à puce DV1 peut ainsi comprendre une pluralité de profils opérationnels PR. Selon une variante, la carte à puce DV1 ne comprend qu'un seul profil opérationnel PR.

La mémoire volatile (RAM) MR2 est utilisée par le processeur 2 pour réaliser différentes fonctions lors du traitement d'une transaction courante TR1. La mémoire MR2 peut notamment être utilisée par le processeur 2 pour y charger un profil PX dit « profil temporaire » qui, comme expliqué par la suite, est une copie de l'un des profils statiques PR contenus dans la mémoire non volatile MR1.

Le profil temporaire PX stocké dans la mémoire MR2 est dynamique dans le sens où il peut être modifié par le processeur 2 au cours du traitement d'une transaction courante TR1.

Le processeur 2 est configuré dans cet exemple pour mettre en œuvre une application de paiement AP1 pouvant être stockée dans une mémoire non volatile quelconque de la carte DV1 (mémoire non volatile réinscriptible ou ROM), par exemple dans la mémoire non volatile réinscriptible MR1. On considère ici que l'application de paiement AP1 comprend un programme d'ordinateur (ou module) PG1 conforme à un mode de réalisation particulier. Selon un exemple particulier, l'application de paiement AP1 et le programme d'ordinateur PG1 forment une seule et même application (ou programme d'ordinateur).

Ce programme d'ordinateur PG1 comprend des instructions exécutables par le processeur 2, pour l'exécution des étapes d'un procédé de traitement de l'invention. Le programme d'ordinateur PG1 comprend en particulier des instructions définissant comment une transaction courante TR1 doit être traitée par la carte à puce DV1 en coopération avec le terminal T1.

La mémoire comprenant le programme d'ordinateur PG1 (et plus globalement l'application AP1) constitue un support d'enregistrement (ou support d'informations) conforme à un mode de réalisation particulier, lisible par la carte à puce DV1.

Comme expliqué par la suite, le programme d'ordinateur PG1 comprend dans cet exemple des règles prédéfinies RL1 et RL2, et éventuellement un historique H géré par la carte à puce DV1. Les règles RL1 définissent en substance quand et comment un profil temporaire PX chargé dans la mémoire volatile MR2 doit être modifié (mis à jour) lors d'une transaction courante TR1. Dans l'exemple considéré ici, ces règles RL1 définissent des modifications notées AT à appliquer au profil temporaire PX sur détection d'au moins un évènement déclencheur EVT, ces modifications pouvant être fonction de conditions CND susceptibles d'être remplies et fonction du profil opérationnel PR dont est issu le profil temporaire PX.

Les règles RL2 permettent d'attribuer une interface de communication INT à chacun des profils opérationnels PR stocké dans la mémoire MR1.

De plus l'historique H permet le cas échéant de garder en mémoire des évènements détectés par la carte, par exemple en enregistrant ces évènements et/ou en monitorant le nombre d'occurrences de ces évènements au moyen par exemple de compteurs CT. La nature et l'utilisation des règles RL1, RL2 et de l'historique H sont décrits plus en détail ultérieurement. Des modes de réalisation sont toutefois possibles sans notamment un tel historique H.

Le processeur 2 exécute dans cet exemple un système d'exploitation OS1 configuré pour détecter des évènements quelconques, en particulier des évènements déclencheurs EVT en réponse desquels des modifications sont apportées au profil temporaire PX, et éventuellement des évènements EVN dits aussi évènements d'historique, ces derniers pouvant éventuellement impacter la nature des modifications apportées au profil temporaire PX. Comme expliqué par la suite, le nombre et la nature des évènements ainsi détectés par le système d'exploitation OS1 peuvent varier selon le cas d'espèce. A noter qu'un évènement déclencheur EVT peut aussi constituer un évènement d'historique EVN au sens de l'invention.

Comme illustré en **figure 1****,** la carte à puce DV1 comprend dans cet exemple 3 différentes interfaces de communication INT, notés respectivement INT1, INT2 et INT3. Ces interfaces sont utilisables par la carte à puce DV1 pour communiquer avec l'extérieur, en particulier pour coopérer avec le terminal T1 dans cet exemple. Chaque interface de communication IN1, INT2 et INT3 est apte à établir respectivement un canal de communication distinct L1, L2 et L3 avec le terminal T1 et/ou avec tout autre terminal approprié. Ces canaux de communication L1-L3 peuvent chacun être établis par contact ou en sans contact, selon des technologies distinctes les unes des autres (par contact, en sans contact selon le protocole NFC pour « Near Field Communication », communication selon le protocole Bluetooth ou BLE, Wifi, etc.).

De manière générale, le nombre et la nature des profils statiques PR peuvent varier selon le cas d'espèce. La carte à puce DV1 peut ainsi comprendre une pluralité de profils opérationnels PR. Selon une variante, la carte à puce DV1 ne comprend qu'un seul profil opérationnel PR.

On suppose par la suite la configuration suivante à titre d'exemple :
- l'interface de communication INT1 est configurée pour établir une communication par contact (par exemple selon le protocole ISO 7816) ;
- l'interface de communication INT2 est configurée pour établir une communication en sans contact de type NFC (par exemple selon le protocole ISO 14443 ou NFC/ISO 15693) ; et
- l'interface de communication INT3 est configurée pour établir une communication Bluetooth (par exemple selon le protocole de la spécification Core 5.1 du consortium Bluetooth SIG).

Par ailleurs, chaque profil opérationnel PR est prévu pour fonctionner avec une interface de communication INT prédéterminé. Ainsi, les paramètres PT de chaque profil statique PR peuvent être adaptés en fonction notamment de l'interface de communication INT associée qui sera utilisée par la carte à puce DV1 pour traiter une transaction courante selon ledit profil considéré. Les paramètres PT peuvent en particulier être adaptés au niveau de risque associé à l'interface de communication correspondante. Une communication en Bluetooth expose par exemple la transaction courante à des risques sécuritaires plus élevés qu'une communication par contact.

Dans l'exemple représenté en **figure 1****,** ce sont les règles RL2 qui définissent l'interface de communication INT respective qui doit être utilisée pour chaque profil opérationnel PR susceptible d'être exécuté par la carte à puce DV1. Plus précisément, on suppose ici que les règles RL2 contenues dans une mémoire non volatile de la carte à puce DV1 définissent les associations suivantes :
- le profil opérationnel PR1 est configuré pour traiter une transaction courante au moyen de l'interface de communication INT1 (par contact dans cet exemple) ;
- le profil opérationnel PR2 est configuré pour traiter une transaction courante au moyen de l'interface de communication INT2 (en sans contact NFC dans cet exemple) ; et
- le profil opérationnel PR3 est configuré pour traiter une transaction courante au moyen de l'interface de communication INT3 (en Bluetooth ou BLE dans cet exemple).

Par souci de simplicité, on considère donc dans cet exemple que chaque interface de communication INT est associée à un unique profil PR qui lui est dédié. On notera cependant qu'il est possible que la carte à puce DV1 contienne plusieurs profils PR associés à une même interface de communication INT et/ou au moins un profil PR associé à plusieurs interfaces de communication INT.

Selon une variante, l'interface de communication INT qui doit être utilisée par la carte à puce DV1 est définie directement dans chaque profil opérationnel PR en tant que paramètre PT. Dans ce cas, les règles RL2 ne sont donc pas nécessaires.

Comme représenté en **figure 1****,** la carte à puce DV1 peut également comprendre un ou des capteurs 4 quelconques configurés pour détecter des évènements susceptibles d'affecter le traitement d'une transaction courante TR1. On considère dans cet exemple que la carte à puce DV1 comprend au moins l'un parmi : un capteur biométrique 4a et un capteur 4b de type bouton ou actuateur (par exemple un bouton mécanique ou un bouton tactile sur un écran). Le capteur biométrique 4a est configuré pour détecter une empreinte biométrique d'un utilisateur, par exemple pour détecter la présence d'un doigt ou vérifier une empreinte digitale ou toutes autres types d'empreintes biométriques. Le capteur 4b permet de détecter par exemple une instruction ou commande émise par un utilisateur. Alternativement, au moins l'un des capteurs 4 n'est pas embarqué dans la carte à puce DV1 mais est déporté à l'extérieur de façon à pouvoir être utilisé à distance par la carte à puce DV1.

A noter que certains éléments généralement présents dans une carte à puce destinée à traiter des transactions de paiement ont été volontairement omis car ils ne sont pas nécessaires à la compréhension de la présente invention. Le dispositif électronique DV1 représenté en **figure 1** ne constitue qu'un exemple de réalisation non limitatif, d'autres mises en œuvre étant possibles dans le cadre de l'invention. L'homme du métier comprend en particulier que certains éléments de la carte à puce DV1 ne sont décrits ici que pour faciliter la compréhension de l'invention, ces éléments n'étant pas nécessaires pour mettre en œuvre l'invention.

Comme représenté en **figure 2** selon un mode de réalisation particulier, le processeur 2 piloté par le programme d'ordinateur PG1 met ici en œuvre un certain nombre de modules, à savoir : un module de sélection MD2, un module de chargement MD4, un module de traitement MD6, un module de modification (ou module de mise à jour) MD8 et, éventuellement, un module de gestion d'historique MD10.

Plus précisément, le module de sélection MD2 est configuré pour sélectionner un premier profil opérationnel PR associé à une première interface de communication INT. Comme décrit ci-après, on supposera par la suite que le premier profil ainsi sélectionné est PR1. Cette sélection peut être réalisée à un quelconque moment avant initiation ou lors d'une transaction en cours TR1 avec le terminal T1.

Le module de chargement MD4 est configuré pour charger dans une mémoire de la carte à puce DV1 (à savoir, la mémoire volatile MR2 dans cet exemple) une copie du premier profil opérationnel PR1 sélectionné par le module de sélection MD2. Cette copie forme un profil temporaire, noté PX, qui est distinct du premier profil opérationnel PR1 contenu dans la mémoire MR1. La copie PX est générée par le module de chargement MD4 de sorte à être identique au profil d'origine PR1. En particulier, les paramètres PT compris dans le profil temporaire PX sont identiques à ceux compris dans le profil PR1.

Le module de traitement MD6 est configuré pour traiter une transaction courante TR1 conformément au profil temporaire PX en coopérant avec un terminal externe (à savoir le terminal T1 dans cet exemple) au moyen de la première interface de communication INT1 associée au profil PR1.

Le module de modification MD8 est configuré, en réponse à au moins un évènement déclencheur EVT détecté au cours de la transaction courante TR1, pour modifier au moins un paramètre PT du profil temporaire PX pour poursuivre le traitement de la transaction courante TR1, selon le profil temporaire PX modifié, au moyen de la première interface de communication INT1 ou d'une autre interface de communication INT (INT2 ou INT3 dans cet exemple).

Ainsi, le module de modification MD8 permet au module de traitement MD6 de poursuivre le traitement de la transaction courante TR1 en opérant non plus selon le profil temporaire PX tel qu'initialement chargé par le module de chargement MD4 mais selon le profil temporaire PX tel que modifié par le module de modification MD8.

Le module de modification MD8 peut ainsi appliquer une pluralité de modifications successives au profil temporaire PX contenu dans la mémoire MR2, en réponse à des évènements déclencheurs EVT respectifs détectés au cours de la transaction courante TR1. Chaque modification s'applique au profil temporaire courant tel que précédemment modifié, de sorte à adapter dynamiquement le traitement de la transaction courante TR1 dans le temps.

Comme expliqué par la suite, le module de modification MD8 peut être configuré pour modifier le profil temporaire PX chargé dans la mémoire MR2 conformément aux règles prédéfinies RL1.

La carte à puce DV1 (et plus particulièrement le module de modification MD8 ou tout autre module correspondant mis en œuvre par le processeur 2) peut être configuré pour, sur détection que la transaction courante TR1 est terminée, supprimer le profil temporaire PX modifié (présent dans la mémoire volatile MR2) tout en maintenant dans la mémoire non volatile MR1 ledit au moins un (chaque) profil opérationnel PR.

Si des modifications successives étaient apportées à ce même profil temporaire PX au cours de multiples transactions au cours du temps, cela pourrait résulter en des variations importantes des paramètres du profil temporaire (déviations des paramètres) et cela pourrait déboucher sur un profil temporaire qui ne reflète plus suffisamment la politique de gestion (notamment gestion de risque) prévue dans le profil opérationnel initialement sélectionné. Afin de maintenir un certain niveau de cohérence et de sécurité dans le traitement de transactions au cours du temps, le profil temporaire modifié peut être supprimé une fois la transaction courante terminée tout en conservant dans la mémoire non volatile MR1 chaque profil opérationnel PR. Il est ainsi possible d'éviter que le profil temporaire ne diverge trop de la politique de gestion de risque initialement prévue dans le profil opérationnel dont il est issu et, plus généralement, de garantir un traitement uniforme et cohérent des transactions au cours du temps.

Le cas échéant, le module de gestion d'historique MD10 est configuré pour gérer un historique H stocké dans une mémoire de la carte à puce DV1. Comme déjà indiqué, cette mémoire peut être une quelconque mémoire de la carte DV1, de type volatile ou de type non volatile réinscriptible selon le cas d'espèce considéré. Cet historique permet de conserver en mémoire divers évènements EVN détectés par la carte à puce DV1 lors de la transaction courante TR1 et/ou avant l'initiation de la transaction courante TR1 (par exemple lors de précédentes transactions). Comme décrit par la suite, l'historique H peut en particulier comprendre au moins un compteur CT permettant de suivre le nombre d'occurrences d'un évènement EVN prédéterminé.

L'invention prévoit ainsi l'établissement d'un premier canal de communication avec le terminal T1 selon une première interface, la sélection d'un premier profil PR1, le chargement dans la mémoire volatile MR2 d'une copie du profil sélectionné PR1 en tant que profil temporaire PX, le traitement de la transaction courante selon le profil temporaire PX puis la modification (mise à jour) d'un ou plusieurs paramètres du profil temporaire PX pour générer un profil hybride, différent des profils opérationnels (statiques) PR stockés de façon statique dans la mémoire de la carte à puce DV1. Le profil temporaire PX peut ensuite être supprimé de la mémoire volatile MR2 tandis que les profils statiques PR sont conservés dans la mémoire non volatile MR1 afin notamment de garantir un traitement uniforme et cohérent des transactions au cours du temps.

L'invention permet d'adapter dynamiquement le traitement d'une transaction courante TR1 au cours du temps en modifiant les paramètres d'un profil temporaire de sorte à ce que celui-ci soit distinct des profils statiques stockés dans la carte à puce DV1. Des modifications (ou mises à jour) peuvent ainsi être apportées à un profil temporaire exécuté par la carte à puce DV1, sans modifier les profils statiques PR qui restent inchangés dans la mémoire non volatile de la carte à puce DV1. Les modifications apportées au profil temporaire PX au cours du temps peuvent être fonction de divers évènements détectés par la carte à puce DV1.

En particulier, il est possible de modifier dynamiquement les paramètres du profil temporaire PX lors d'une transaction courante en fonction notamment d'un ou d'une pluralité de changements d'interfaces de communication opérés par la carte à puce DV1 et/ou de changements d'état de la carte à puce DV1. En outre, l'invention offre la possibilité d'adapter le comportement de la carte à puce de sorte que le profil hybride résultant puisse être différent selon l'ordre dans lequel ces évènements interviennent. Par exemple, selon l'ordre dans lequel des changements d'interface de communication se produisent, le profil hybride peut évoluer différemment afin d'adapter le comportement de la carte à chaque situation particulière.

En modifiant dynamiquement le profil temporaire PX, on peut ainsi personnaliser la gestion de risque implémentée par la carte à puce DV1 de sorte à réaliser la transaction courante TR1 de façon à la fois flexible et sécurisée.

La configuration et le fonctionnement des modules MD2-MD10 de la carte à puce DV1 apparaîtront plus précisément dans les exemples de réalisation décrits ci-après dans des modes de réalisation particuliers. Il importe de noter que les modules MD2-MD10 tels que représentés en **figure 2** ne représentent qu'un exemple de mise en œuvre non limitatif de l'invention.

De manière générale, pour chaque étape du procédé de l'invention, le dispositif électronique de l'invention peut comprendre un module correspondant configuré pour réaliser ladite étape.

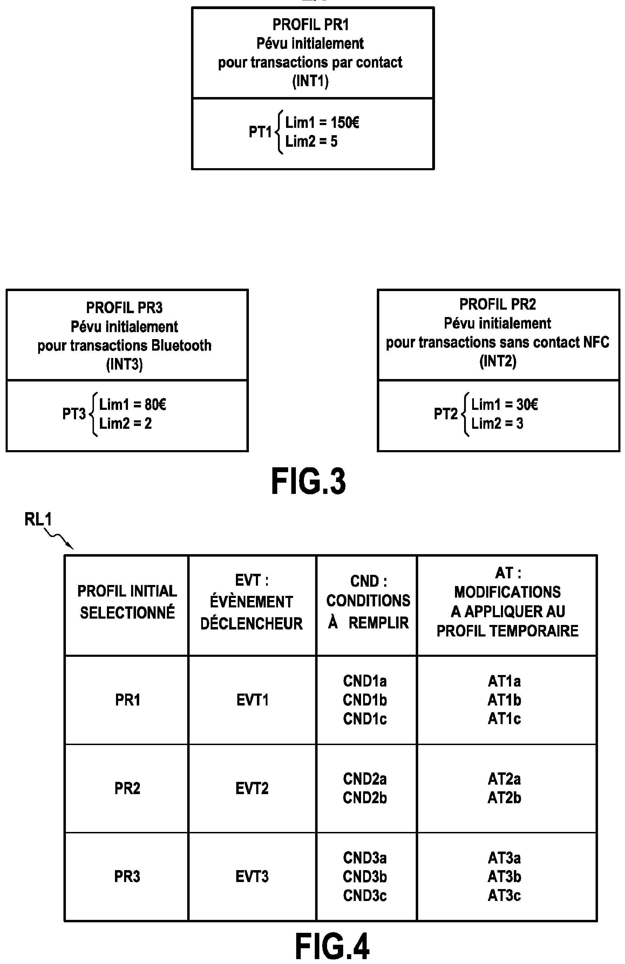

Comme déjà indiqué, on suppose par la suite que le profil PR1 est conçu pour fonctionner avec l'interface INT1 (par contact), le profil PR2 avec l'interface INT2 (sans contact selon NFC) et le profil PR3 avec l'interface INT3 (Bluetooth ou BLE). La **figure 3** représente, selon un mode de réalisation particulier, des exemples de paramètres PT définis dans chacun de ces profils opérationnels PR1, PR2 et PR3.

Plus précisément, on considère par la suite que les profils PR1, PR2 et PR3 comprennent des paramètres PT, notés respectivement PT1, PT2 et PT3. Les paramètres PT1-PT3 des profils respectifs PR1-PR3 comprennent ici chacun deux paramètres Lim1 et Lim2. Selon une variante, les profils PR contenus dans la mémoire MR1 comprennent au moins l'un parmi Lim1 et Lim2 mentionnés ci-avant.

Le paramètre Lim1 définit un montant limite maximal autorisé pour une transaction courante TR1. Autrement dit, si ce montant limite est dépassé lors d'une transaction courante TR1, alors celle-ci n'est pas autorisée.

Le paramètre Lim2 définit un nombre limite maximal de transactions successives autorisées sans vérification d'un code PIN. Autrement dit, si ce nombre limite est dépassé lors du traitement d'une transaction courante TR1, alors celle-ci est autorisée seulement si une vérification de code PIN est passée avec succès.

On suppose par la suite que les paramètres Lim1 et Lim2 sont fixés comme suit :
- Profil PR1 (prévu pour traiter une transaction par contact) : Lim1 = 150 € et Lim2 = 5 ;
- Profil PR2 (prévu pour traiter une transaction en sans contact NFC) : Lim1 = 30 € et Lim2 = 3 ; et
- Profil PR3 (prévu pour traiter une transaction par Bluetooth) : Lim1 = 80 € et Lim2 = 2.

Ainsi, lorsque la carte à puce DV1 fonctionne par exemple selon le profil PR1, une transaction courante TR1 ne peut être autorisée que si le montant de cette transaction n'excède pas 150 € et si le nombre de transactions successives autorisées sans vérification de code PIN n'excède pas 5. Comme on peut le constater, les paramètres Lim1 et Lim2 sont plus permissifs dans le profil PR1 que dans les profils PR2 et PR3 car les transactions par contact sont considérées comme étant plus sécurisées que les transactions sans contact. Bien entendu, la valeur de chaque paramètre PT des profils PR peut être adaptée au cas par cas. Comme indiqué ci-avant, des règles RL1 du programme d'ordinateur PG1 sont stockées dans une mémoire de la carte à puce DV1. Cette mémoire peut être une mémoire non volatile, telle que la mémoire MR1 par exemple, ou une mémoire volatile (RAM), telle que la mémoire MR2 par exemple.

Comme décrit ci-après dans des exemples de réalisation, les règles RL1 définissent en substance quand et comment un profil temporaire PX chargé dans la mémoire volatile MR2 doit être modifié (mis à jour) par la carte à puce DV1 lors du traitement d'une transaction courante TR1 afin d'adapter dynamiquement le traitement de ladite transaction courante. Dans l'exemple considéré ici, ces règles RL1 définissent au moins une modification notée AT à appliquer au profil temporaire PX sur détection d'au moins un évènement déclencheur EVT, ces modifications étant fonction de conditions CND susceptibles d'être remplies et fonction du profil opérationnel PR dont est issu le profil temporaire PX (c'est-à-dire le profil opérationnel PR qui a servi de modèle pour produire la copie dans MR2).

La **figure 4** représente à titre d'exemple des règles RL1 préenregistrées dans la carte à puce DV1. Le nombre et la nature de ces règles prédéterminées RL1 peuvent bien entendu être adaptés au cas par cas.

Plus précisément, dans l'exemple considéré ici, les règles RL1 configurent la carte à puce DV1 pour réaliser des modifications du profil temporaire PX comme suit :
- Si le profil temporaire PX est issu d'une copie du profil PR1, alors sur détection d'au moins un évènement EVT1, la carte à puce DV1 doit appliquer respectivement les modifications AT1a, AT1b ou AT1c si les conditions respectives CND1a, CND1b ou CND1c sont remplies ;
- Si le profil temporaire PX est issu d'une copie du profil PR2, alors sur détection d'au moins un évènement EVT2, la carte à puce DV1 doit appliquer respectivement les modifications AT2a ou AT2b si les conditions respectives CND2a ou CND2b sont remplies ; et
- Si le profil temporaire PX est issu d'une copie du profil PR3, alors sur détection d'au moins un évènement EVT3, la carte à puce DV1 doit appliquer respectivement les modifications AT3a, AT3b ou AT3c si les conditions respectives CND3a, CND3b ou CND3c sont remplies.

A noter que le profil temporaire PX courant contenu dans la mémoire volatile MR2 à un instant donné est nécessairement issu d'une copie de l'un des profils statiques PR stockés dans la mémoire MR1. Le profil temporaire PX courant peut être une copie à l'identique d'un profil PR (aucune modification n'a encore été appliquée audit profil temporaire PX) ou une copie d'un profil PR ayant déjà subi des modifications d'au moins l'un de ses paramètres PT.

A noter également que de multiples formes et variantes de ces règles RL1 sont possibles. En particulier, le nombre et la nature des évènements déclencheurs EVT, des conditions CND à remplir ou encore des modifications AT à appliquer peuvent être adaptés par l'homme du métier selon le cas d'usage.

Chaque évènement EVT définit au moins l'un parmi un état de la carte à puce DV1 lors d'une transaction courante TR1 et au moins une caractéristique d'une transaction courante TR1. Il peut s'agir d'un évènement quelconque qui affecte l'état ou le comportement de la carte à puce DV1 et qui est détectable par cette dernière selon des moyens appropriés.

Les évènements déclencheurs EVT susceptibles d'être définis dans les règles RL1 peuvent comprendre au moins l'un parmi :
- un évènement détecté par un capteur embarqué 4 de la carte à puce DV1 ;
- des données externes reçues depuis le terminal externe T1 ou depuis un autre terminal au cours de la transaction courante TR1 ;
- des données internes générées par la carte à puce DV1 en réponse à la transaction courante TR1 ; et
- un évènement caractérisant l'utilisation d'une interface de communication INT par la carte à puce DV1 pour coopérer avec l'extérieur (le terminal T1 par exemple) lors de la transaction courante TR1.

Ainsi, un évènement déclencheur EVT au sens des règles RL1 peut être (ou comprendre) un quelconque évènement biométrique détecté par un capteur biométrique 4a de la carte à puce DV1 (détection ou validation d'une empreinte biométrique, etc.) ou un quelconque évènement (commande ou instruction d'un utilisateur, etc.) détecté par un actuateur 4b (bouton mécanique, tactile,...) embarqué dans la carte à puce DV1 ; ou un évènement de charge quelconque caractérisant un niveau de charge courant de la batterie 6 dont dispose le cas échéant la carte à puce DV1, ou encore une quelconque combinaison des évènements déclencheurs EVT définis ci-avant.

De plus, un évènement déclencheur EVT au sens des règles RL1 peut être (ou comprendre) la détection qu'un temps prédéterminé, qui s'est écoulé depuis un évènement de référence (début transaction, vérification PIN...), a atteint une valeur seuil.

Un évènement déclencheur EVT au sens des règles RL1 peut également être (ou comprendre) un changement d'interface de communication INT utilisée par la carte à puce DV1 au cours de la transaction courante TR1 pour coopérer avec le terminal externe T1 ou avec un autre terminal, par exemple sur commande de la carte à puce DV1 ou du terminal externe T1, ou de manière générale l'utilisation d'une interface de communication INT prédéterminée pour traiter la transaction courante TR1.

Selon un exemple particulier, l'un au moins des évènements déclencheurs EVT tels que définis dans les règles RL1 est un évènement détecté par la carte à puce DV1 qui caractérise une commutation, au cours de la transaction en cours TR1, de l'interface de communication INT utilisée par la carte à puce DV1 pour coopérer avec le terminal T1, depuis une première interface de communication (INT1 par exemple) vers une autre, dite deuxième, interface de communication (INT2 ou INT3 par exemple). Selon un exemple particulier, la carte à puce DV1 réalise une commutation d'interface pour communiquer avec un terminal externe (non représenté) autre que le terminal T1, afin de traiter au moins une partie de la transaction courante TR1 avec cet autre terminal.

Divers types de commutations d'interfaces peuvent être envisagés en tant qu'évènement déclencheur EVT dans les règles prédéfinies RL1, comme par exemple :
- commutation d'une transaction par contact à une transaction Bluetooth : ce changement d'interface au cours d'une transaction courante TR1 permet de retirer la carte à puce DV1 du lecteur T1 avant la fin de la transaction (i.e. avant que la carte ait terminé de coopérer avec le terminal) tout en maintenant un niveau de sécurité adapté ;
- commutation d'une transaction sans contact (NFC) vers une transaction Bluetooth : ce changement d'interface permet à l'utilisateur de faire une transaction en un mouvement de carte au voisinage du terminal T1 puis de ranger sa carte avant la fin de la transaction (perception d'une transaction plus courte).

Les données internes mentionnées ci-dessus en tant qu'évènement déclencheur EVT peuvent être ou comprendre des données d'historique comprise dans l'historique H ou représenter la valeur d'au moins un compteur de cet historique H (compteur atteignant une valeur limite maximale ou minimale, etc.).

Les données externes mentionnées ci-dessus en tant qu'évènement déclencheur EVT peuvent être ou comprendre le type de la transaction courante TR1 (paiement, remboursement, authentification, crédit, débit, etc.), un identifiant AID utilisé pour sélectionner l'application de paiement AP1, le type de commerçant, la monnaie de la transaction, etc.

Chaque évènement EVT déclencheur au sens des règles RL1 peut ainsi être ou comprendre une quelconque combinaison des évènements déclencheurs EVT définis ci-avant. La carte à puce DV1 peut ainsi entreprendre des modifications appropriées d'au moins un paramètre PT du profil temporaire PX présent dans la mémoire vive MR2 en réponse à un ou des évènements déclencheurs détectées au cours de la transaction courante TR1. La carte à puce DV1 peut notamment prendre en compte un ou des changements d'interface de communication INT réalisés lors du traitement de la transaction courante TR1, et plus particulièrement le type des interfaces utilisées et éventuellement l'ordre dans lequel ces interfaces sont successivement utilisées pour traiter une même transaction courante TR1.

Par ailleurs, diverses conditions CND peuvent être envisagées dans les règles RL1 selon le cas d'espèce. Dans un cas particulier, il est possible de n'attribuer aucune condition CND à remplir pour une mise à jour AT donnée. Dans ce cas, la mise à jour AT est réalisée systématique sur détection de l'évènement déclencheur EVT associé. Selon un exemple particulier, aucune condition CND n'est définie dans toutes les règles RL1 de sorte qu'une quelconque mise à jour AT est réalisée sur un profil temporaire PX sur détection d'un évènement déclencheur EVT associé. Diverses modifications AT peuvent être envisagées dans les règles RL1 selon le cas d'espèce. Les modifications AT telles que définies dans les règles RL1 peuvent par exemple comprendre la modification de la valeur d'au moins un paramètre PT du profil temporaire PX présent dans la mémoire volatile MR2. Cette modification peut viser par exemple le changement de la valeur d'un paramètre PT afin de renforcer ou diminuer le niveau de sécurité avec lequel la carte à puce DV1 traite une transaction courante TR1.

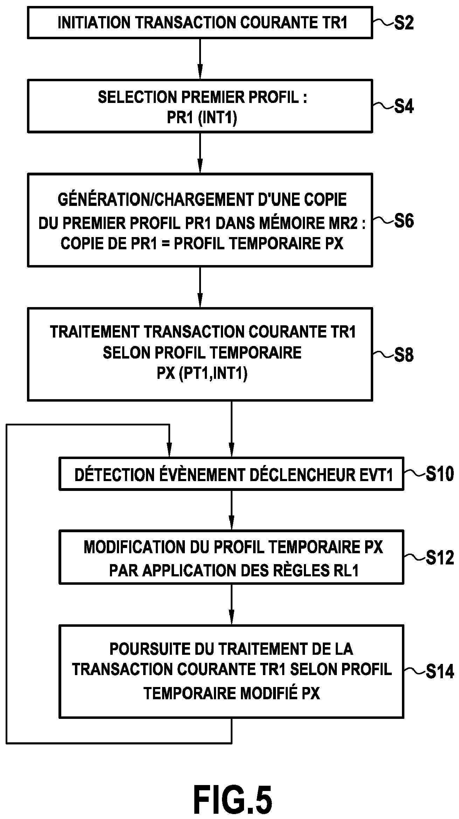

Un mode de réalisation particulier est à présent décrit en référence à la **figure 5****.** Plus précisément, la carte à puce DV1 met en œuvre un procédé (ou procédé de traitement) en exécutant le programme d'ordinateur PG1.

On suppose par la suite que les profils opérationnels PR1, PR2 et PR3 sont tels que décrits précédemment en référence à la **figure 3****.**

On considère ici que la carte à puce DV1 initie (S2) une transaction courante TR1 en coopération avec le terminal externe T1. Comme déjà indiqué, on suppose ici qu'il s'agit d'une transaction de paiement traité par la carte à puce DV1 en tant que carte de paiement qui interagit avec le terminal T1 en tant que terminal de paiement. Cette transaction de paiement est réalisée dans cet exemple selon le standard EMV.

Au cours de cette initiation S2, la carte à puce DV1 et le terminal T1 établissent un canal de communication, dit canal de communication initial, pour débuter la transaction TR1 et s'échanger des données. Ce canal de communication initial est établi au moyen de l'une des interfaces de communication INT disponibles dans la carte à puce DV1. Dans cet exemple, le canal de communication initial ainsi ouvert peut donc être un canal L1 par contact, un canal L2 sans contact de type NFC ou un canal L3 Bluetooth (ou BLE), comme représenté en **figure 1****.** Il s'agit d'un canal de communication dit « initial » dans le sens où la carte à puce DV1 peut éventuellement par la suite établir un autre canal de communication au moyen d'une autre d'interface de communication INT (comme expliqué ultérieurement).

On suppose en outre que le terminal T1 sélectionne l'application de paiement AP1 lors de cette phase S2 d'initiation.

Au cours d'une étape S4 de sélection, la carte à puce DV1 sélectionne un premier profil opérationnel PR parmi les profils PR1-PR3 stockés de façon statique dans la mémoire MR1. Le profil PR ainsi sélectionné constitue un premier profil opérationnel (encore appelé profil initial) au sens de l'invention. Conformément aux règles RL2, ce profil initial PR est associé à une interface de communication INT de la carte à puce DV1. Autrement dit, la carte à puce DV1 est configurée pour utiliser l'interface de communication INT associée lorsqu'elle opère selon le premier profil opérationnel PR pour traiter une transaction courante.

Diverses manières de réaliser cette sélection S4 sont possibles.

Selon un premier exemple, la sélection S4 du premier profil opérationnel est réalisée en fonction de l'interface de communication utilisée en S2 par la carte à puce DV1 pour débuter la transaction courante TR1 en coopération avec le terminal T1, c'est-à-dire pour établir le canal de communication initial. Pour ce faire, la carte à puce DV1 détermine (S4) par exemple le premier profil PR à sélectionner en S4 à partir des règles RL2 **(****figure 1**) stockées en mémoire dans la carte à puce DV1. Pour rappel, ces règles RL2 attribuent pour chaque interface de communication INT1, INT2 et INT3, un premier profil opérationnel respectif PR1, PR2 et PR3 à sélectionner en S4.

Par exemple, on suppose dans la suite de cet exemple que la carte à puce DV1 est insérée dans le terminal de paiement T1 ce qui déclenche en S2 l'ouverture d'un canal de communication initial L1 par contact. En réponse à l'ouverture du canal de communication L1 par contact, la carte à puce DV1 sélectionne (S4) alors le profil PR1 en tant que premier profil opérationnel conformément aux règles RL2.

D'autres façons de sélectionner le profil initial en S4 sont toutefois possibles. En variante, le premier profil opérationnel PR est par exemple sélectionné en S4 selon des données reçues du terminal T1 lors de la transaction courante TR1, par exemple en réponse à une commande GET PROCESSING OPTION reçue du terminal T1 conformément au standard EMV. Cette commande comprend des informations (pays, type de commerçant, monnaie utilisée, type de transaction, etc.) à partir desquelles la carte à puce DV1 peut déterminer quel profil initial PR doit être sélectionné en S4.

Une fois l'étape S4 de sélection réalisée, la carte à puce DV1 réalise une étape S6 de chargement au cours de laquelle elle charge dans sa mémoire volatile MR2 une copie du premier profil opérationnel PR1 sélectionné en S4, cette copie formant un profil temporaire PX distinct du premier profil opérationnel PR1 stocké dans la mémoire non volatile MR1. Cette copie PX générée en S6 par la carte à puce DV1 est identique au premier profil opérationnel PR1 dont elle est issue, et comprend donc en particulier les mêmes paramètres PT1 que le profil PR1 (notamment dans cet exemple : les paramètres Lim1 = 150 € et Lim2 = 5 prévus pour une transaction par contact, comme représenté en **figure 3**).

A noter que, lors du chargement S6, le profil temporaire PX est chargé dans la mémoire volatile MR2 tout en maintenant dans la mémoire non volatile MR1 le premier profil opérationnel PR1. Chaque profil statique PR1-PR3 est maintenu inchangé dans la mémoire MR1 tout au long de la transaction courante TR1, indépendamment du chargement et de la gestion ultérieure de la copie PX dans la mémoire MR2.

La carte à puce DV1 traite (S8, **figure 5**) ensuite la transaction courante TR1 conformément au profil temporaire PX en coopérant avec le terminal T1 au moyen de la première interface de communication associée au premier profil PR dont est issu le profil temporaire PX, c'est-à-dire au moyen de l'interface de communication par contact INT1 dans cet exemple. En particulier, la carte à puce DV1 applique les paramètres PT1 définis dans le profil temporaire PX pour traiter la transaction courante TR1.

La carte à puce DV1 détecte (S10) ensuite au cours de la transaction courante TR1 au moins un évènement déclencheur EVT tel que défini dans les règles RL1 stockées dans une mémoire de la carte à puce DV1. Pour ce faire, on suppose par exemple que la carte à puce DV1 vérifie périodiquement ou à des moments appropriés, lors du traitement S8 de la transaction courante TR1, si au moins un évènement déclencheur EVT est détecté.

Selon un exemple particulier, au cours du traitement S8 de la transaction courante TR1 selon le profil temporaire PX, la carte à puce DV1 vérifie, pour chaque évènement détecté, si celui-ci constitue un évènement déclencheur EVT tel que prédéfini dans les règles RL1.

L'événement déclencheur EVT peut être de diverses natures, comme déjà décrit en référence à la **figure 4****.** L'événement déclencheur EVT peut être ou comprendre l'un quelconque des exemples précédemment décrits en référence notamment à la **figure 4****,** ou une quelconque combinaison de plusieurs de ces exemples.

Pour rappel, l'évènement déclencheur EVT détecté en S8 peut par exemple comprendre au moins l'un parmi :
- un évènement détecté par un capteur 4 de la carte à puce DV1 ;
- des données externes reçues depuis le terminal T1 ou un autre terminal (non représenté) au cours de la transaction courante TR1 ;
- des données internes générées par la carte à puce DV1 en réponse à la transaction courante TR1 ; et
- un évènement caractérisant l'utilisation d'une interface de communication par la carte à puce DV1 pour coopérer avec l'extérieur (le terminal T1 par exemple) lors de la transaction courante TR1.

A titre d'exemple, l'évènement déclencheur EVT détecté en S10 correspond à l'utilisation d'une interface de communication INT autre que l'interface initiale INT1 pour traiter la transaction courante TR1 en coopération avec le terminal T1. Des exemples particuliers seront décrits ultérieurement.

En réponse à l'évènement déclencheur EVT détecté en S10, la carte à puce modifie (S12, **figure 5**) alors au moins un paramètre PT1 du profil temporaire PX conformément aux règles prédéfinies RL1 pour poursuivre le traitement de la transaction courante TR1, selon le profil temporaire PX modifié, au moyen de la première interface de communication INT1 ou éventuellement au moyen d'une autre interface de communication INT (INT2 ou INT3 dans cet exemple) si un changement d'interface de communication se produit au sein de la carte à puce DV1 pour traiter la transaction courante TR1.

Comme déjà indiqué, la nature des modifications AT appliquées au profil temporaire PX peut varier selon le cas, conformément aux règles prédéfinies RL1. Ces modifications AT peuvent notamment comprendre la modification de la valeur d'au moins un paramètre PT1 du profil temporaire PX présent dans la mémoire volatile MR2. Les modifications AT à appliquer au profil temporaire PX peuvent donc être déterminées par la carte à puce DV1 de façon interne à partir des règles prédéfinies RL1, sans prendre en compte une quelconque commande (ou donnée) provenant de l'extérieur de la carte à puce DV1. Autrement dit, la réception de commandes depuis l'extérieur de la carte à puce DV1 peut constituer un évènement déclencheur EVT au sens des règles prédéfinies RL1, mais ne définit pas nécessairement les modifications AT appliquées par la carte à puce DV1 au profil temporaire PX selon les règles RL1.

Lors de l'étape S12 de modification, le profil temporaire PX modifié ainsi obtenu est différent du premier profil opérationnel PR1 et, plus généralement, est différent de chaque profil opérationnel PR1-PR3 sélectionnable par la carte à puce DV1. Ces modifications S12 permettent ainsi de générer dynamiquement au cours de la transaction courante TR1 un nouveau profil hybride qui diffère de tous les profils statiques PR stockés dans la mémoire MR1.

A noter qu'une modification AT appliquée en S12 sur le profil temporaire PX peut comprendre la suppression d'un paramètre PT1 existant ou l'ajout d'un nouveau paramètre PT1 dans le profil temporaire PX.

On suppose ici que les modifications appliquées (S12) au profil temporaire PX sont fonction du premier profil opérationnel (PR1 dans cet exemple) dont est issu le profil temporaire PX. La carte à puce DV1 modifie (S12) par exemple le profil temporaire PX conformément aux règles prédéterminées RL1 qui, comme précédemment décrit en référence notamment à la **figure 4****,** définissent au moins une modification AT à appliquer au profil temporaire en fonction du premier profil opérationnel (PR1 dans cet exemple) sélectionné en S4.

Selon un exemple particulier, lors de l'étape S6 de chargement (S6), la carte à puce DV1 charge également dans sa mémoire volatile MR2 un identifiant IDP du premier profil opérationnel PR1 sélectionné en S4, puis identifie ultérieurement le premier profil opérationnel PR1 à partir de cet identifiant IDP. La carte à puce DV1 peut ainsi appliquer en S12 les règles RL1 au profil temporaire PX en fonction du premier profil opérationnel PR1 identifié par l'identifiant IDP.

Les modifications AT apportées au profil temporaire PX en S12 peuvent dépendre d'autres facteurs comme, par exemple, de conditions CND susceptibles d'être satisfaites pour un profil initial donné. Comme représenté en **figure 4****,** les règles RL1 peuvent ainsi définir divers types de modification AT à appliquer en fonction du premier profil opération PR1 dont est issu le profil temporaire PX et en fonction de si des conditions prédéfinies CND sont remplies.

Ces conditions CND peuvent par exemple requérir qu'au moins un évènement prédéfini EVN (autre que l'évènement déclencheur EVT associé) ait été détecté et enregistré par la carte à puce DV1 dans l'historique H, avant détection de l'évènement déclencheur EVT associé, pour que la ou les modifications AT associées selon les règles RL1 soient appliquées. Ainsi, le profil temporaire PX peut par exemple être modifié en S12 selon au moins une règle prédéterminée RL1 définissant au moins une modification AT à appliquer en fonction du premier profil opérationnel PR1 sélectionné en S4 et en fonction d'au moins un évènement prédéterminé EVN détecté lors de la transaction courante TR1, avant détection de l'évènement déclencheur EVT. Il est ainsi possible d'appliquer des modifications AT différentes selon la ou les conditions CND qui sont satisfaites.

Dans l'exemple considéré ici, la carte à puce DV1 vérifie par exemple au cours du traitement S8 de la transaction courante TR1 si l'évènement déclencheur EVT1 (associé au premier profil opérationnel PR1) survient. Sur détection (S10) de cet évènement déclencheur EVT1, la carte à puce DV1 vérifie alors si au moins l'une des conditions prédéfinies CND1a, CND1b et CND1c associées au premier profil opérationnel PR1 dont est issu le profil temporaire PX est satisfaite. Si la condition CND1a, CND1b et/ou CND1c est satisfaite, alors la carte à puce modifie au moins un paramètre PT1 du profil temporaire PX en appliquant les modifications (ou mises à jour) AT1a, AT1b et/ou AT1c, respectivement.

Les conditions CND1a, CND1b et CND1c peuvent par exemple chacune requérir que la carte à puce DV1 détecte au moins un évènement d'historique EVN prédéfini pour déclencher, en réponse à l'évènement déclencheur EVT1, les modifications respectives AT1a, AT1b et AT1c. Comme déjà indiqué, les conditions CND peuvent prévoir divers évènements d'historique EVN détectés par la carte à puce DV1 lors de la transaction courante TR1 et/ou avant l'initiation de la transaction courante TR1 (par exemple lors de précédentes transactions). Ces évènements EVN peuvent en particulier comprendre au moins un compteur CT représentatif du nombre d'occurrences d'un évènement EVN prédéterminé. Des exemples d'évènements d'historique EVN sont décrits ultérieurement.

De même, les modifications AT1a, AT1b et AT1c peuvent de diverses natures. Des exemples de modifications de paramètres PT sont décrits ultérieurement. Il peut s'agir notamment de l'augmentation ou de la diminution de la valeur d'au moins un paramètre PT, de la suppression d'au moins un paramètre PT et/ou de l'ajout d'au moins un nouveau paramètre PT.

Au cours d'une étape S14 de traitement, la carte à puce DV1 poursuit ainsi le traitement de la transaction courante TR1 conformément au profil temporaire PX modifié obtenu à l'issue de l'étape S12 de modification.

L'invention prévoit ainsi l'établissement d'un premier canal de communication avec le terminal T1 selon une première interface de communication INT1, la sélection d'un premier profil PR1, le chargement d'une copie du profil sélectionné PR1 en tant que profil temporaire PX, le traitement de la transaction courante TR1 selon le profil temporaire PX puis la modification (mise à jour) d'un ou plusieurs paramètres PT1 du profil temporaire PX pour générer un profil hybride, différent des profils opérationnels PR stockés de façon statique dans la mémoire de la carte à puce DV1.

L'invention permet ainsi d'adapter dynamiquement le traitement d'une transaction courante TR1 au cours du temps en modifiant les paramètres d'un profil temporaire de sorte à ce que celui-ci soit distinct des profils statiques stockés dans la carte à puce DV1. Des modifications (ou mises à jour) peuvent ainsi être apportées à un profil temporaire exécuté par la carte à puce DV1, sans modifier les profils statiques PR qui restent inchangés dans la mémoire de la carte à puce DV1. Les modifications apportées au profil temporaire PX au cours du temps peuvent être fonction de divers évènements détectés par la carte à puce DV1.

En particulier, il est possible de modifier dynamiquement les paramètres d'un profil opérationnel PR lors d'une transaction courante en fonction notamment d'un ou d'une pluralité de changements d'interfaces de communication opérés par la carte à puce DV1 et/ou de changements d'état de la carte à puce DV1.

En modifiant dynamiquement le profil temporaire PX, on peut ainsi personnaliser la gestion de risque implémentée par la carte à puce DV1 pour réaliser la transaction courante TR1 de façon à la fois flexible et sécurisée.

A noter que plusieurs itérations des étapes S10 à S14 **(****figure 5****)** peuvent être réalisées de façon analogue à ce qui est décrit ci-avant afin de modifier à plusieurs reprises le profil temporaire PX courant selon lequel opère la carte à puce DV1 à un instant donné pour traiter la transaction courante TR1.

Ainsi, selon un exemple particulier, le procédé comprend N itérations de l'étape S12 de modification (et plus généralement N itérations du cycle d'étapes S10-S14) de sorte à modifier successivement N fois au moins un paramètre PT1 du profil temporaire PX, N étant un entier supérieur ou égal à 2.

De cette manière, il est possible d'ajuster le traitement d'une transaction courante TR1 au fil du temps en fonction des évènements détectés par la carte à puce DV1.

Sur détection que la transaction courante TR1 est terminée, la carte à puce DV1 peut supprimer le profil temporaire PX dans la mémoire volatile MR2 tout en maintenant dans sa mémoire non volatile MR1 le premier profil statique PR1 (et plus généralement, en maintenant dans sa mémoire non volatile MR1 chaque profil statique PR). Ce profil temporaire PX est un profil hybride adapté au traitement d'une transaction dans un contexte particulier, ce qui ne conviendra pas nécessairement pour des transactions ultérieures. Il n'est donc pas nécessaire de maintenir ce profil temporaire PX en mémoire.

Selon un exemple particulier, une fois que le traitement de la transaction courante TR1 est achevé, l'alimentation électrique de la carte à puce DV1 est coupée, ce qui engendre l'effacement du contenu de la mémoire vive MR2, y compris le profil temporaire PX.

Selon un exemple particulier, une fois la transaction courante TR1 achevée, la carte à puce DV1 est configurée pour bloquer tout usage ultérieur du profil temporaire PX jusqu'à ce que la mémoire vive MR2 soit vidée.

Selon un exemple particulier, après suppression (ou blocage) du profil temporaire PX, la carte à puce DV1 charge dans sa mémoire volatile MR2 l'un parmi les profils statiques PR sélectionnables dans la mémoire MR1. Il est ainsi possible de restaurer l'un parmi les profils supportés par la carte à puce DV1 afin de rendre un comportement normal à la carte à puce DV1.

Selon un exemple particulier, la carte à puce DV1 réalise l'étape S12 (figure 5) de modification du profil temporaire PX sur détection d'un évènement déclencheur EVT selon lequel une vérification d'un code PIN a été réalisée avec succès par la carte à puce DV1. La vérification du code PIN permet de sécuriser sensiblement le traitement de la transaction courante TR1. Aussi, sur détection que le code PIN est validée, la carte à puce DV1 peut modifier le profil temporaire PX afin de diminuer le niveau de sécurité d'au moins l'un de ses paramètres PT1. Dans ce cas, la carte à puce DV1 peut par exemple bloquer ou supprimer le profil temporaire PX modifié sur détection qu'un temps supérieur à une durée de validité limite s'est écoulée depuis la modification du profil temporaire, de sorte à empêcher le traitement de la transaction courante selon le profil temporaire PX modifié.

En effet, plus l'instant de la vérification du code PIN s'éloigne dans le temps, et moins cette vérification est gage de sécurité pour la transaction courante TR1, dans la mesure par exemple où un vol ou une attaque de la carte à puce DV1 peut se produire dans l'intervalle. Il est ainsi possible de bénéficier de la flexibilité du profil temporaire qui s'adapte dans le temps tout en maintenant un niveau de sécurité élevé. Ce mécanisme de validité limitée dans le temps du profil temporaire modifié trouve par exemple une application lorsqu'un utilisateur réalise au moyen de sa carte bancaire des achats successifs dans le cadre d'une même transaction en mode Bluetooth après avoir saisi son code PIN (par exemple au cours d'une phase préalable de la transaction en mode par contact).

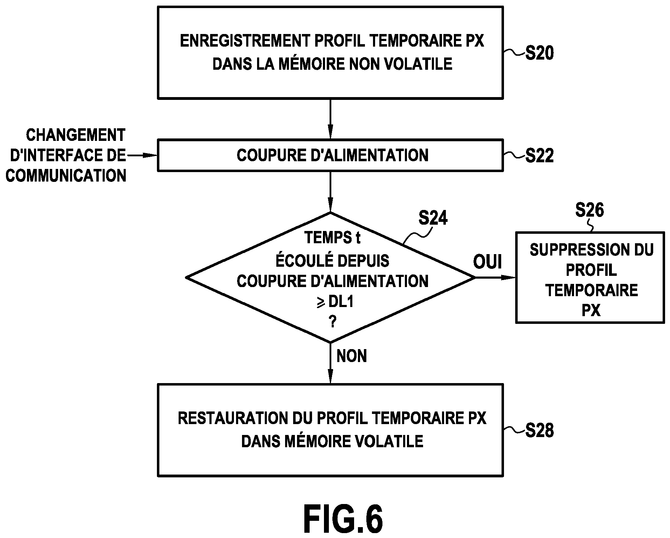

La **figure 6** représente une variante de réalisation des modes de réalisation décrits ci-avant en référence à la **figure 5****.** Selon cette variante, on suppose que la carte à puce DV1 enregistre (S20) le profil temporaire PX dans sa mémoire non volatile MR1. On suppose dans cet exemple que le profil temporaire PX a déjà été modifié conformément aux étapes S2-S12 décrites précédemment en référence à la **figure 5****.** Autrement dit, le profil temporaire PX est un profil hybride différent des profils statiques PR1-PR3 déjà présents dans la mémoire MR1.

Au cours d'une étape S22, on suppose ensuite que la carte à puce DV1 subit une coupure de son alimentation électrique, par exemple en raison d'un changement de l'interface de communication INT qu'elle utilise pour traiter la transaction courante TR1. La carte à puce DV1 peut par exemple être configurée pour procéder à l'enregistrement S20 dans la mémoire non volatile MR1 en réponse à un évènement indiquant l'imminence d'une coupure d'alimentation électrique.

Par exemple, si la transaction courante TR1 passe d'un traitement par contact à un traitement sans contact (NFC) ou Bluetooth (ou BLE), une coupure d'alimentation électrique se produit généralement, ce qui peut engendrer la perte du profil temporaire PX et perturber le comportement de la carte à puce DV1.

Une fois l'alimentation électrique restaurée, la carte à puce DV1 vérifie (S24) si le temps t écoulé depuis la coupure d'alimentation électrique est supérieur ou égal à une durée limite maximale DL1. Si tel est le cas, le procédé procède à l'étape S26 au cours de laquelle la carte à puce DV1 supprime (ou bloque) le profil temporaire PX. Dans le cas contraire (temps écoulé t inférieur à DL1), le procédé se poursuit à l'étape S28 au cours de laquelle la carte à puce DV1 restaure le profil temporaire PX dans sa mémoire volatile MR2. Autrement dit, si le temps écoulé entre la coupure d'alimentation électrique et le rétablissement de l'alimentation électrique n'excède pas la durée limite maximale DL1, la carte à puce DV1 charge à nouveau le profil temporaire PX courant dans sa mémoire volatile MR2. Une fois le chargement effectué, la carte à puce DV1 peut traiter (c'est-à-dire poursuivre le traitement de) la transaction courante TR1 conformément au profil temporaire PX et poursuivre le procédé comme déjà décrit ci-avant en référence à la **figure 5****.**

Il est ainsi possible de sécuriser le traitement d'une transaction courante TR1 (notamment vis-à-vis d'attaques malveillantes) lorsqu'une coupure d'alimentation électrique doit être réalisée, par exemple en raison d'une commutation d'interface de communication au cours de la transaction courante TR1. Si le temps nécessaire pour rétablir l'alimentation électrique de la carte à puce DV1 est jugé trop long, le profil temporaire PX courant présent dans la mémoire non volatile est supprimé (ou bloqué) afin d'empêcher par exemple qu'un tiers bénéficie illicitement d'une ancienne vérification du code PIN pour valider une transaction future.

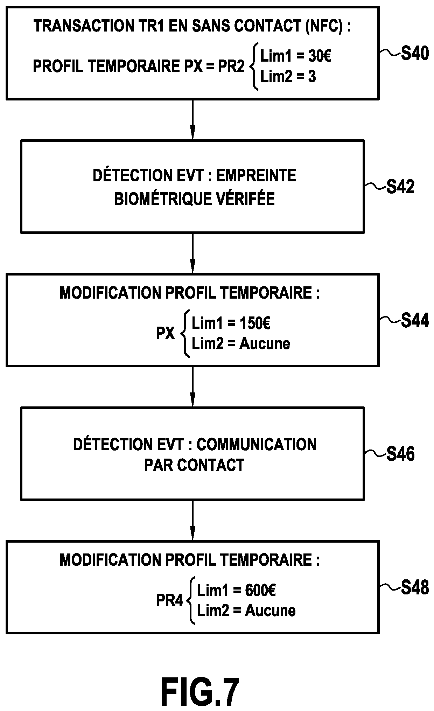

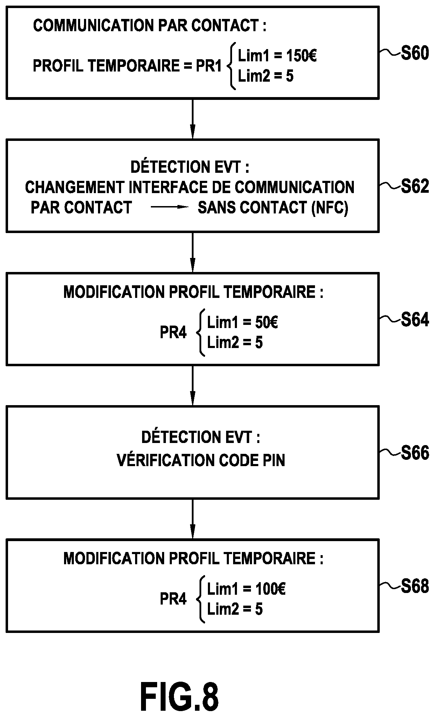

Les **figures 7** et **8** représentent des exemples de mises en œuvre du procédé de l'invention décrit ci-avant en référence notamment à la **figure 5****.** Ces exemples non limitatifs visent à illustrer de possibles applications du procédé et du dispositif électronique de l'invention. Dans ces exemples de mise en œuvre, la carte à puce DV1 exécute le programme d'ordinateur PG1 pour traiter une transaction courante TR1 de façon analogue à ce qui a été décrit précédemment.

Ainsi, comme représenté en **figure 7****,** la carte à puce DV1 peut adapter dynamiquement dans le temps son comportement lors d'une transaction courante TR1 en réponse à des évènements déclencheurs EVT.

Plus précisément, on suppose ici que la carte à puce DV1 traite (S40) une transaction courante TR1 en mode sans contact en utilisant l'interface de communication INT2 pour coopérer avec le terminal externe T1. Pour ce faire, la carte à puce DV1 réalise les étapes S2 à S8 **(****figure 5****)** telles que déjà décrites afin notamment de sélectionner en tant que premier profil opérationnel le profil PR2 prévu selon les règles RL2 pour le traitement des transactions sans contact (NFC), puis de charger en tant que profil temporaire PX une copie du profil PR2. La carte à puce DV1 traite ainsi en S40 la transaction courante TR1 en sans contact conformément aux paramètres PT2 **(****figure 3****)** du profil PR2 (Lim1 = 30 € et Lim2 = 3).

Au cours d'une étape S42, la carte à puce DV1 détecte un évènement déclencheur EVT, de façon analogue à l'étape S10 **(****figure 5****)** précédemment décrite. Dans cet exemple, l'évènement déclencheur EVT est la détection par la carte à puce DV1 qu'une empreinte biométrique a été vérifiée avec succès au moyen de son capteur biométrique 4a. En réponse à la détection S42 de cet évènement déclencheur EVT, la carte à puce DV1 procède à une modification (S44) du profil temporaire PX présent dans la mémoire volatile MR2, de façon analogue à l'étape S12 **(****figure 5****)** précédemment décrite. Dans cet exemple, les paramètres PT2 du profil temporaire PX sont modifiées selon les règles RL1 de sorte à ce que : Lim1 = 150 € et Lim2 = AUCUNE, ce qui signifie que la valeur seuil Lim1 est augmentée de 30 € à 150 € et qu'aucune valeur n'est attribuée à la valeur seuil Lim2 (ce qui signifie qu'il n'y a plus de nombre limite maximal de transactions autorisées sans vérification d'un code PIN).

La vérification de l'empreinte biométrique de l'utilisateur est garant d'un haut niveau de sécurité, c'est pourquoi la carte à puce DV1 peut avantageusement assouplir les paramètres PT2 du profil temporaire PX pour faciliter et accélérer la transaction tout en maintenant un niveau de sécurité satisfaisant.

La carte à puce DV1 peut ainsi poursuivre (S46) le traitement de la transaction courante TR1 conformément au profil temporaire PX tel que modifié en S44, de façon analogue à l'étape S12 **(****figure 5****)** précédemment décrite.

La carte à puce DV1 peut par la suite réitérer le mécanisme de modification du profil temporaire PX contenu dans la mémoire volatile MR2. Ainsi, la carte à puce DV1 détecte par exemple en S46 que la transaction commute en mode de communication par contact avec le terminal T1. Autrement dit, un changement d'interface de communication vers l'interface de communication INT1 par contact est détecté en S46.

En réponse au changement d'interface S46, la carte à puce DV1 modifie (S48) à nouveau le profil temporaire PX qui avait déjà été modifié en S44. Dans Cet exemple, les paramètres PT2 du profil temporaire PX sont de nouveau modifiées selon les règles RL1 de sorte à ce que : Lim1 = 600 € et Lim2 = AUCUNE, ce qui signifie que la valeur seuil Lim1 est augmentée de 150 € à 600 € et qu'aucune valeur n'est attribuée à la valeur seuil Lim2 (ce qui signifie qu'il n'y a toujours pas de nombre limite maximal de transactions autorisées sans vérification d'un code PIN).

Le passage de la transaction en mode par contact renforce le niveau de sécurité de la transaction, c'est pourquoi la carte à puce DV1 peut avantageusement assouplir de nouveau les paramètres PT2 du profil temporaire PX pour faciliter et accélérer encore la transaction tout en maintenant un niveau de sécurité satisfaisant.

La carte à puce DV1 peut ainsi poursuivre le traitement de la transaction courante TR1 conformément au profil temporaire PX modifié. En outre, comme déjà décrit en référence notamment à la **figure 5****,** sur détection que la transaction courante TR1 est terminée, la carte à puce DV1 peut supprimer le profil temporaire PX dans la mémoire volatile MR2 tout en maintenant (inchangé) dans sa mémoire non volatile MR1 chaque profil statique PR.

Selon un autre exemple représenté en **figure 8****,** on suppose ici que la carte à puce DV1 traite (S60) une transaction courante TR1 en mode par contact en utilisant l'interface de communication INT1 pour coopérer avec le terminal externe T1. Pour ce faire, la carte à puce DV1 réalise les étapes S2 à S8 **(****figure 5****)** telles que déjà décrites afin notamment de sélectionner en tant que premier profil opérationnel le profil PR1 prévu selon les règles RL2 pour le traitement des transactions par contact, puis de charger en tant que profil temporaire PX une copie du profil PR1. La carte à puce DV1 traite ainsi en S60 la transaction courante TR1 par contact conformément aux paramètres PT1 **(****figure 3****)** du profil PR1 (Lim1 = 150 € et Lim2 = 5).

Au cours d'une étape S62, la carte à puce DV1 détecte un évènement déclencheur EVT, de façon analogue à l'étape S10 **(****figure 5****)** précédemment décrite. Dans cet exemple, l'évènement déclencheur EVT est à la détection par la carte à puce DV1 d'une commutation d'interface de communication vers l'interface de communication sans contact (NFC) INT2. En réponse à la détection S62 de cet évènement déclencheur EVT, la carte à puce DV1 procède à une modification (S64) du profil temporaire PX présent dans la mémoire volatile MR2, de façon analogue à l'étape S12 **(****figure 5****)** précédemment décrite. Dans cet exemple, les paramètres PT1 du profil temporaire PX sont modifiés selon les règles RL1 de sorte à ce que : Lim1 = 50 € et Lim2 = 5, ce qui signifie que la valeur seuil Lim1 est diminué de 150 € à 50 € et que la valeur seuil Lim2 reste inchangée.

Le passage d'un traitement par contact à un traitement sans contact NFC implique généralement une baisse du niveau de sécurité de la transaction courante, c'est pourquoi la carte à puce DV1 peut avantageusement adapter les paramètres PT1 du profil temporaire PX pour les rendre plus strict afin de préserver un niveau de sécurité satisfaisant.

La carte à puce DV1 peut ainsi poursuivre (S66) le traitement de la transaction courante TR1 conformément au profil temporaire PX tel que modifié en S64, de façon analogue à l'étape S12 **(****figure 5****)** précédemment décrite.

La carte à puce DV1 peut par la suite réitérer le mécanisme de modification du profil temporaire PX contenu dans la mémoire volatile MR2. Ainsi, la carte à puce DV1 détecte par exemple en S66 en tant qu'évènement déclencheur EVT qu'une code PIN a été vérifié avec succès.

En réponse à cet évènement déclencheur EVT, la carte à puce DV1 modifie (S68) à nouveau le profil temporaire PX qui avait déjà été modifié en S64. Dans Cet exemple, les paramètres PT1 du profil temporaire PX sont de nouveau modifiées selon les règles RL1 de sorte à ce que : Lim1 = 100 € et Lim2 = 5, ce qui signifie que la valeur seuil Lim1 est augmentée de 50 € à 100 € et que la valeur seuil Lim2 reste un changé à la valeur 5.

Comme déjà indiqué, la vérification du code PIN de la carte à puce DV1 renforce le niveau de sécurité de la transaction, c'est pourquoi la carte à puce DV1 peut avantageusement assouplir de nouveau les paramètres PT1 du profil temporaire PX pour faciliter et accélérer encore la transaction tout en maintenant un niveau de sécurité satisfaisant.

La carte à puce DV1 peut ainsi poursuivre le traitement de la transaction courante TR1 conformément au profil temporaire PX modifié. En outre, comme déjà décrit en référence notamment à la **figure 5****,** sur détection que la transaction courante TR1 est terminée, la carte à puce DV1 peut supprimer le profil temporaire PX dans la mémoire volatile MR2 tout en maintenant (inchangé) dans sa mémoire non volatile MR1 chaque profil statique PR.

Par ailleurs, comme déjà indiqué, les modifications réalisées par la carte à puce DV1 sur le profil temporaire PX lors de l'étape S12 représentée en **figure 5** peuvent être fonction non seulement du profil initial sélectionné en S4 mais également d'autres facteurs tels que, par exemple, au moins un évènement prédéterminé EVN - dit aussi évènement d'historique - détecté par la carte à puce DV1 lors de la transaction courante TR1. Ces évènements d'historique EVN peuvent être de même nature que les exemples décrits ci-avant en référence aux évènements déclencheurs EVT (vérification avec succès d'un code PIN, détection d'une commutation de l'interface de communication utilisée lors de la transaction courante, vérification avec succès d'une empreinte biométrique, etc.).

Selon un exemple particulier, la carte à puce DV1 est configurée pour surveiller l'occurrence d'évènements prédéterminés EVN lors de la transaction courante TR1 et pour enregistrer ces évènements dans son historique H afin d'être récupéré par la suite pour appliquer les règles RL1 en vue de modifier le profil temporaire PX.

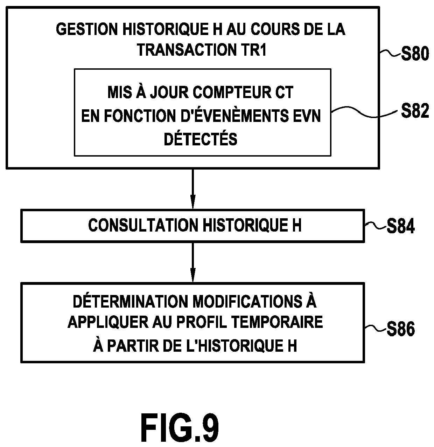

Selon un exemple particulier représenté en **figure 9****,** la carte à puce DV1 génère ou gère (S80) un historique H représentatif d'au moins un évènement EVN détecté par la carte à puce DV1 lors de la transaction courante TR1 (cet historique étant ici stocké dans une mémoire de la carte à puce DV1, par exemple une mémoire non volatile telle que MR1). Selon un exemple particulier, cet historique H est stocké et mis à jour au cours d'une pluralité de transactions. La carte à puce DV1 consulte (S84) ensuite l'historique H lors de la transaction courante TR1, de façon à déterminer (S86) les modifications à appliquer en S12 aux paramètres PT du profil temporaire PX courant en fonction de l'historique H, c'est-à-dire en fonction des évènements EVN précédemment détectés. Ainsi, au cours de l'étape S12 de modification, la carte à puce DV1 met à jour le profil temporaire PX courant à partir des modifications déterminées au préalable en S86.

Le ou les évènements déclencheurs EVT permettent ainsi de déclencher une mise à jour du profil temporaire PX tandis que le ou les évènements d'historique EVN détectés par la carte à puce DV1 ont un impact sur la nature des modifications réalisées sur le profil temporaire PX courant.

A noter que la forme de l'historique et la manière dont il est géré par la carte à puce DV1 peuvent varier selon le cas. La carte à puce DV1 peut notamment enregistrement dans l'historique H des évènements EVN détectés au fil du temps, par exemple sous la forme d'identifiants d'évènement, et/ou peut enregistrer un ou des compteurs représentatifs du nombre d'occurrences d'évènements prédéterminés EVN. L'historique H peut par exemple comprendre une table (ou base de données) comportant les évènements EVN détectés, en association éventuellement avec d'autres attributs tels que par exemple l'instant au cours duquel s'est produit cet événement.

Selon un exemple particulier représenté en **figure 9****,** au cours de l'étape S80 de génération d'historique, la carte à puce DV1 met à jour dans l'historique H au moins un compteur CT **(****figure 1****)** représentatif d'un nombre d'occurrences d'un événement respectif prédéterminé EVN au cours du temps. Cette mise à jour S82 est par exemple réalisée en fonction d'évènements détectés au cours de la transaction courante TR1. Une mise à jour de compteur peut par exemple comprendre l'incrémentation ou la décrémentation d'un compteur CT sur détection d'un évènement d'historique EVN particulier.

Le profil temporaire PX peut ainsi être modifié en S12 **(****figure 5****)** en fonction d'une valeur courante dudit au moins un compteur CT. Par exemple, la carte à puce DV1 applique en S12 **(****figure 5****)** des modifications prédéterminées AT sur le profil temporaire PX si la valeur courante dudit au moins un compteur CT satisfait une condition prédéterminée CND (conformément aux règles RL1). Autrement dit, les modifications AT appliquées au profil temporaire PX courante sont déterminées en comparant la valeur courante dudit au moins un compteur CT avec au moins une condition respective à respecter.

Selon un exemple particulier, lors de l'étape S82 de mise à jour **(****figure 9****),** la carte à puce DV1 réalise une incrémentation d'un premier compteur CT1 sur détection d'un premier type d'événement d'historique EVN et réalise une décrémentation de ce premier compteur CT1 sur détection d'un deuxième type d'événement d'historique EVN autre que ledit premier type d'évènement d'historique EVN. Le profil temporaire PX est ainsi modifié en S12 **(****figure 5****)** en fonction d'une valeur courante du premier compteur.

Par exemple, la carte à puce DV1 incrémente un compteur CT1 sur chaque détection qu'un code PIN est vérifié avec succès et décrémente ce même compteur CT1 sur chaque détection d'un évènement d'historique prédéterminé autre qu'une vérification de code PIN avec succès, comme par exemple une commutation d'interface de communication (par exemple passage par contact vers sans contact).

Le profil temporaire PX peut ainsi être adapté en fonction de l'état de compteurs : plus un évènement pertinent s'éloigne dans le temps (décrémentation du compteur) et moins la carte à puce DV1 prend en compte cet évènement pour modifier le profil temporaire PX. A l'aide de tels compteurs CT, la carte à puce DV1 peut gérer l'aspect temporel des modifications de façon décorélée du terminal T1.

Selon un exemple particulier, lors de l'étape S82 de mise à jour **(****figure 9****),** la carte à puce DV1 réalise une décrémentation d'un deuxième compteur CT2 associé à un type d'évènement EVN prédéterminé après chaque écoulement d'une période de temps prédéterminée depuis un instant de référence. Par exemple, le compteur CT2 est décrémenté à chaque heure écoulée à compter de la détection d'un évènement d'historique EVN prédéterminé associé audit compteur CT2.

Le profil temporaire PX peut ainsi être adapté en fonction de l'état de compteurs : plus un évènement s'éloigne dans le temps (décrémentation progressive du compteur) et moins la carte à puce DV1 prend en compte cet évènement pour modifier le profil temporaire PX. A l'aide de tels compteurs CT, la carte à puce DV1 peut gérer l'aspect temporel des modifications de façon décorélée du terminal T1.

Selon un exemple particulier, le procédé de traitement mis en œuvre par la carte à puce DV1 tel que décrit précédemment comprend N itérations du mécanisme de modification, c'est-à-dire N itération des étapes S12 à S14 **(****figure 5****)** de sorte à modifier successivement N fois au moins un paramètre PT du profil temporaire PX, N étant un entier supérieur ou égal à 2. Dans ce cas, à chaque itération de l'étape S12 de modification, un compteur CT3 - appelé ici compteur de modifications - est mis à jour de sorte à représenter le nombre total de modifications appliquées sur le profil temporaire PX depuis un instant de référence (par exemple depuis l'étape S6 de chargement du profil temporaire PX ou depuis un événement déclencheur EVT prédéterminé). Sur détection que le compteur de modifications CT3 atteint une valeur seuil prédéterminée, la carte à puce DV1 bloque alors toute modification S12 ultérieure du profil temporaire PX courant.

En effet, il peut être difficile d'anticiper comment le profil temporaire PX peut évoluer après un nombre important de mises à jour conformément au mécanisme de l'invention. Un nombre excessif de modifications du profil temporaire PX au cours du temps peut avoir pour conséquence que le profil temporaire PX ne reflète plus suffisamment la politique de gestion de risques prévue dans le profil opérationnel initial sélectionné en S4 **(****figure 5****),** ce qui peut ne pas être souhaitable en termes de sécurité et de cohérence de traitement des transactions, notamment du point de vue de l'émetteur de la carte à puce DV1.

Il est ainsi possible de limiter le nombre de modifications qui sont appliquées successivement à un même profil temporaire PX au cours d'une même transaction courante afin d'éviter que celui-ci ne diverge trop de la politique de gestion de risque initialement prévue dans le profil opérationnel PR dont il est issu. On peut ainsi bénéficier de la flexibilité du profil temporaire qui s'adapte dans le temps tout en maintenant un niveau de sécurité élevé et une cohérence dans la politique de gestion de risque appliquée par une même carte à puce sur une pluralité de transactions.

On comprend que de multiples variations et déclinaisons du concept général de l'invention sont possibles. Ainsi, un homme du métier comprendra que les modes de réalisation et variantes décrits ci-avant ne constituent que des exemples non limitatifs de mise en œuvre de l'invention. L'homme du métier pourra envisager une quelconque adaptation ou combinaison des modes de réalisation et variantes décrits ci-avant afin de répondre à un besoin bien particulier.

## Revendications

1. Procédé mis en œuvre par un dispositif électronique (DV1) comprenant au moins une interface de communication (INT) pour communiquer avec l'extérieur et au moins un profil opérationnel (PR) sélectionnable par le dispositif électronique, chaque profil opérationnel définissant au moins un paramètre (PT) selon lequel le dispositif électronique doit opérer pour traiter une transaction (TR1) en utilisant une interface de communication associée, le procédé comprenant :
- sélection (S4) d'un premier profil opérationnel (PR1) associé à une première interface de communication (INT1) ;
- chargement (S6) dans une mémoire (MR2) du dispositif électronique d'une copie du premier profil opérationnel sélectionné, ladite copie formant un profil temporaire (PX) distinct dudit premier profil opérationnel ;
- traitement (S8) d'une transaction courante (TR1) conformément au profil temporaire (PX) en coopérant avec un terminal externe (T1) au moyen de la première interface de communication (INT1) ; et
- en réponse à au moins un événement déclencheur (EVT) détecté (S10) au cours de ladite transaction courante, modification (S12) d'au moins un paramètre (PT) du profil temporaire pour poursuivre le traitement de la transaction courante (TR1), selon le profil temporaire (PX) modifié, au moyen de la première interface de communication (INT1) ou d'une autre dite interface de communication (INT), ladite modification étant déterminée à partir d'au moins une règle prédéterminée (RL1) définissant au moins une modification à appliquer en réponse audit événement déclencheur (EVT).

2. Procédé selon la revendication 1, dans lequel ledit au moins un profil opérationnel est stocké dans une mémoire non volatile du dispositif électronique, dans lequel, lors dudit chargement, le profil temporaire est chargé dans une mémoire volatile du dispositif électronique tout en maintenant dans la mémoire non volatile ledit au moins un profil opérationnel.

3. Procédé selon la revendication 1 ou 2, dans lequel ledit au moins un paramètre dudit au moins un profil opérationnel sélectionnable par le dispositif électronique comprend au moins un critère de sécurité à appliquer pour traiter de façon sécurisée une transaction.

4. Procédé selon l'une quelconque des revendications 1 à 3, dans lequel la transaction courante étant une transaction de paiement.

5. Procédé selon l'une quelconque des revendications 1 à 4, dans lequel ladite au moins un règle prédéterminée (RL1) est enregistrée dans une mémoire du dispositif électronique (DV1).

6. Procédé selon l'une quelconque des revendications 1 à 5, dans lequel ledit au moins un événement déclencheur comprend au moins l'un parmi :
- un événement détecté par un capteur embarqué dans le dispositif électronique ;
- des données externes reçues depuis le terminal externe ou un autre terminal au cours de la transaction courante ;
- des données internes générées par le dispositif électronique en réponse à la transaction courante ; et
- un événement caractérisant l'utilisation d'une interface de communication par le dispositif électronique pour coopérer avec l'extérieur lors de la transaction courante.

7. Procédé selon l'une quelconque des revendications 1 à 6, dans lequel ledit au moins un événement déclencheur détecté par le dispositif électronique caractérise une commutation, au cours de la transaction en cours, de l'interface de communication utilisée par le dispositif électronique pour traiter la transaction courante, depuis ladite première interface de communication vers une autre, dite deuxième, interface de communication dudit dispositif électronique.

8. Procédé selon l'une quelconque des revendications 1 à 7, comprenant :
- un enregistrement du profil temporaire, avant ou après ladite modification, dans une mémoire non volatile du dispositif électronique ; puis
- restauration du profil temporaire dans une mémoire non volatile du dispositif électronique pour traiter la transaction en cours, après une coupure d'alimentation du dispositif électronique résultant d'un changement d'interface de communication utilisée par le dispositif électronique, seulement si le temps écoulé entre la coupure d'alimentation et la restauration n'excède pas une durée limite prédéterminée.

9. Procédé selon l'une quelconque des revendications 1 à 8, dans lequel ladite modification comprend la modification de la valeur d'au moins un paramètre du profil temporaire.

10. Procédé selon l'une quelconque des revendications 1 à 9, dans lequel ladite modification est réalisée de sorte que le profil temporaire modifié est différent de chaque profil opérationnel sélectionnable par le dispositif électronique.

11. Procédé selon l'une quelconque des revendications 1 à 10, comprenant :
- génération d'un historique représentatif d'au moins un événement détecté par le dispositif électronique lors de la transaction courante ; et
- consultation de l'historique lors de la transaction courante,
la modification dudit au moins un paramètre du profil temporaire étant réalisée en fonction dudit historique.

12. Procédé selon la revendication 11 comprenant, au cours de la génération d'historique, le stockage dans l'historique d'au moins un compteur (CT) représentatif d'un nombre d'occurrences d'un événement prédéterminé au cours du temps,
le profil temporaire étant modifié en fonction d'une valeur courante dudit au moins un compteur.

13. Procédé selon l'une quelconque des revendications 11 à 12, dans lequel la génération d'historique comprend une incrémentation d'un premier compteur (CT1) sur détection d'un premier type d'évènement et une décrémentation dudit premier compteur sur détection d'un deuxième type d'évènement autre que ledit premier type d'évènement,
le profil temporaire étant modifié en fonction d'une valeur courante dudit premier compteur.

14. Procédé selon l'une quelconque des revendications 1 à 13, dans lequel le procédé comprend N itérations de ladite modification de sorte à modifier successivement N fois au moins un paramètre du profil temporaire, N étant un entier supérieur ou égal à 2, le procédé comprenant :
- mise à jour, à chaque itération de ladite modification, d'un compteur de modifications (CT3) de sorte à représenter le nombre total de modifications appliquées sur le profil temporaire, et
- sur détection que le compteur de modifications atteint une valeur seuil prédéterminée, blocage de toute modification ultérieure dudit profil temporaire.

15. Dispositif électronique (DV1) comprenant :
- au moins une interface de communication (INT) pour communiquer avec l'extérieur ;
- au moins un profil opérationnel (PR) sélectionnable par le dispositif électronique, chaque profil opérationnel définissant au moins un paramètre (PT) selon lequel le dispositif électronique doit opérer pour traiter une transaction en utilisant une interface de communication associée ;
- un module de sélection (MD2) configuré pour sélectionner un premier profil opérationnel (PR1) associé à une première interface de communication (INT1) ;
- un module de chargement (MD4) configuré pour charger dans une mémoire (MR2) du dispositif électronique une copie du premier profil opérationnel sélectionné, ladite copie formant un profil temporaire (PX) distinct dudit premier profil opérationnel ;
- un module de traitement (MD6) configuré pour traiter une transaction courante conformément au profil temporaire en coopérant avec un terminal externe au moyen de la première interface de communication ; et
- un module de modification (MD8) configuré pour modifier, en réponse à au moins un événement déclencheur (EVT) détecté au cours de ladite transaction courante, au moins un paramètre (PT) du profil temporaire pour permettre au module de traitement de poursuivre le traitement de la transaction courante, selon le profil temporaire modifié, au moyen de la première interface de communication (INT1) ou d'une autre dite interface de communication (INT), ledit module de modification étant configuré pour déterminer la modification apportée audit au moins un paramètre à partir d'au moins une règle prédéterminée (RL1) définissant au moins une modification à appliquer en réponse audit événement déclencheur (EVT).
